# EUROPEAN PATENT APPLICATION

(11) **EP 2 541 169 A1**
(43) Date of publication of application: **02.01.2013**
(21) Application number: 10846534.5
(22) Date of filing: 26.02.2010
(51) Int. Cl.: F25B 29/00, F24D 17/02, F24F 5/00, F24H 1/00

(54) **AIR CONDITIONER AND AIR-CONDITIONING HOT-WATER-SUPPLYING SYSTEM**

(71) Applicant: Hitachi, Ltd., Chiyoda-ku Tokyo 100-8280 (JP)
(72) Inventor: KOTANI, Masanao, Chiyoda-ku, Tokyo 100-8220 (JP); KOMATSU, Tomohiro, Chiyoda-ku, Tokyo 100-8220 (JP); KOKUGAN, Yoko, Chiyoda-ku, Tokyo 100-8220 (JP); UCHIDA, Mari, Chiyoda-ku, Tokyo 100-8220 (JP)
(74) Representative: Beetz & Partner
(86) International application number: PCT/JP2010/053124
(87) International publication number: WO 2011/104870

(57) **Abstract**

[Problem]

To provide a chiller type air conditioner that can perform a humidifying operation in one cooling cycle without increasing a facility cost.

[Solution]

An air conditioner includes: an air conditioning refrigerant circuit 5 performing a cooling operation and a heating operation by switching the cooling operation and the heating operation; and an air conditioning heat transfer medium circulation circuit 8 conditioning air of a cooled space 60, wherein connection switching means 34a and 34b for switching the connection of a first air conditioning user-side heat exchanger 28a and a second air conditioning user-side heat exchanger 28b to serial connection and parallel connection are installed in the air conditioning refrigerant circuit and a second air conditioning expansion valve is installed at a position between the first air conditioning user-side heat exchanger and the second air conditioning user-side heat exchanger. The air conditioning heat transfer medium circulation circuit 8 includes a first air conditioning heat transfer medium circuit 8a formed in a loop by connecting the first air conditioning user-side heat exchanger and a first indoor heat exchanger 61a through a pipe and a second air conditioning heat transfer medium circuit 8b formed in a loop by connecting the second air conditioning user-side heat exchanger and a second indoor heat exchanger 61b through a pipe.

## Description

### TECHNICAL FIELD

The present invention relates to an air conditioner and an air conditioning hot water supply system, and particularly, is suitable for a chiller type air conditioner and an air conditioning hot water supply system that control air by circulating water or a heat transfer medium in an indoor heat exchanger installed in a cooled space.

### BACKGROUND ART

The related art that performs a dehumidifying operation for a general house or an office building in a central mode (a mode in which cold water or hot water is generated at one site and circulated in each room) includes, for example, a technology disclosed in Patent Literature 1 or Patent Literature 2. Patent Literature 1 discloses the technology that performs a cooling/heating operation by generating the cold water and the hot water by operating a boiler in heating and operating a cooler in cooling, and performs a dehumidifying operation by operating both the boiler and the cooler, and switching a control valve of a secondary circuit, in an air conditioning device with the boiler and the cooler. Patent Literature 2 discloses the technology that performs the dehumidifying operation by installing a user-side heat exchanger and a reheating heat exchanger with respect to a blowing direction of an indoor blower with the reheating heat exchanger installed downstream of the user-side heat exchanger.

### CITATION LIST

### PATENT LITERATURE

PATENT LITERATURE 1: JP-A No. H08-261516
PATENT LITERATURE 2: JP-A No. 2002-206795

### SUMMARY OF INVENTION

### TECHNICAL PROBLEM

However, in the related art disclosed in Patent Literature 1, since two kinds of heat source equipments of a boiler and a cooler are required to perform a dehumidifying operation, a facility cost is increased. In the technology disclosed in Patent Literature 1, since the control valve of the secondary circuit needs to be switched in the dehumidifying operation, the control is complicated.

Meanwhile, in the technology disclosed in Patent Literature 2, three operations of cooling, heating, and dehumidifying can be performed by one refrigeration cycle, but since the dehumidifying operation is performed based on the cooling operation, a heating amount cannot be largely taken when a reheating amount is short. In the technology disclosed in Patent Literature 2, since the reheating heat exchanger (the user-side heat exchanger in heating) is installed downstream of an air stream in the cooling operation or the heating operation, a difference in temperature between air and refrigerant cannot be largely taken and the heat exchanger cannot be efficiently used.

The present invention is contrived to solve the problems and an object of the present invention is to provide a chiller type air conditioner and an air conditioning hot water supply system that can perform a dehumidifying operation in one cooling cycle without increasing a facility cost.

### SOLUTION TO PROBLEM

In order to solve the problem, an air conditioner according to the present invention includes: an air conditioning refrigerant circuit 5 performing a cooling operation and a heating operation by switching the cooling operation and the heating operation; and an air conditioning heat transfer medium circulation circuit 8 conditioning air of a cooled space 60, wherein the air conditioning refrigerant circuit 5 includes an air conditioning refrigerant main circuit 5a that is formed in a loop by sequentially connecting an air conditioning compressor 21, an air conditioning flow path switching valve 22, an air conditioning heat source-side heat exchanger 24 for exchanging heat with an air conditioning heat source-side heat transfer medium (for example, the air), a first air conditioning expansion valve 27a, and a first air conditioning user-side heat exchanger 28a for exchanging heat with an air conditioning user-side heat transfer medium (for example, water or brine) through a refrigerant pipe, a first air conditioning refrigerant branch way 5b bypassing the first air conditioning user-side heat exchanger is installed in the air conditioning refrigerant main circuit, a second air conditioning user-side heat exchanger 28b for exchanging heat with the air conditioning user-side heat transfer medium (water or brine) is installed on the first air conditioning refrigerant branch way so as to connect with the first air conditioning user-side heat exchanger in parallel, the air conditioning refrigerant main circuit and the first air conditioning refrigerant branch way are connected through an air conditioning bypass pipe 29 so that the first air conditioning user-side heat exchanger and the second air conditioning user-side heat exchanger are connected in series, connection switching means 34a and 34b for switching the connection of the first air conditioning user-side heat exchanger and the second air conditioning user-side heat exchanger to serial connection and parallel connection are installed in the air conditioning refrigerant circuit, a second air conditioning expansion valve 27b is installed at a position between the first air conditioning user-side heat exchanger and the second air conditioning user-side heat exchanger of the air conditioning refrigerant circuit while the first air conditioning user-side heat exchanger and the second air conditioning user-side heat exchanger are connected in series by the connection switching means, the air conditioning heat transfer medium circulation circuit includes a first air conditioning heat transfer medium circuit 8a formed in a loop by connecting the first air conditioning user-side heat exchanger and a first indoor heat exchanger 61a installed in the cooled space through a pipe and a second air conditioning heat transfer medium circuit 8b formed in a loop by connecting the second air conditioning user-side heat exchanger and a second indoor heat exchanger 61b installed in the cooled space through a pipe, and water or brine is circulated in each of the first air conditioning heat transfer medium circuit and the second air conditioning heat transfer medium circuit as the air conditioning user-side heat transfer medium.

According to the air conditioner according to the present invention, since the second air conditioning expansion valve is installed, for example, in the cooling operation, a depressurization amount and a flow rate of the air conditioning refrigerant are controlled by the first air conditioning expansion valve, the air conditioning heat source-side heat exchanger may be made to serve as a condenser by fully opening the second air conditioning expansion valve, and both the first air conditioning user-side heat exchanger and the second air conditioning user-side heat exchanger may be made to serve as an evaporator.

According to the air conditioner according to the present invention, in the heating operation, the depressurization amount and the flow rate of the air conditioning refrigerant are controlled by the first air conditioning expansion valve, both the first air conditioning user-side heat exchanger and the second air conditioning user-side heat exchanger may be made to serve as the condensers by fully opening the second air conditioning expansion valve and the air conditioning heat source-side heat exchanger may be made to serve as the evaporator.

According to the air conditioner of the present invention, in the dehumidifying operation, the first air conditioning expansion valve is fully opened and the second air conditioning expansion valve is controlled to perform the following operation. For example, when a cooling and dehumidifying load is comparatively high, the air conditioning flow path switching valve is switched to a cooling side and the air conditioning heat source-side heat exchanger is made to serve as the condenser. In this case, an outdoor fan is controlled so that a heat dissipation amount dissipated to the air conditioning heat source-side heat exchanger is a heat dissipation amount corresponding to a reheating amount generated by reheating air after cooling and dehumidifying. The air conditioning refrigerant passing through the air conditioning heat source-side heat exchanger makes the first air conditioning user-side heat exchanger serve as the condenser to dissipate heat to the air conditioning user-side heat transfer medium. Thereafter, the air conditioning refrigerant passes through the air conditioning bypass pipe and then passes through the second air conditioning expansion valve to be depressurized and expanded. The air conditioning refrigerant passing through the second air conditioning expansion valve absorbs heat from the air conditioning user-side heat transfer medium through the second air conditioning user-side heat exchanger and flows back to the air conditioning compressor by passing through the air conditioning flow path switching valve. Such a dehumidifying operation is available in the air conditioner of the present invention.

In the air conditioner according to the present invention, the air conditioning flow path switching valve is switched to a heating side, and the first air conditioning expansion valve and the second air conditioning expansion valve are controlled to perform the dehumidifying operation having a comparatively small dehumidifying load and suitable for a load pattern as if there is a heating load. In this case, the second air conditioning user-side heat exchanger is made to serve as the condenser, such that the air conditioning refrigerant dissipates heat to the air conditioning user-side heat transfer medium through the second air conditioning user-side heat exchanger to be cooled. The air conditioning refrigerant passing through the second air conditioning user-side heat exchanger is depressurized by the second air conditioning expansion valve and absorbs heat from the air conditioning user-side heat transfer medium through the first air conditioning user-side heat exchanger. In this case, a depressurization amount of the second air conditioning expansion valve is controlled to be a depressurization amount depending on the dehumidifying amount. The air conditioning refrigerant passing through the first air conditioning user-side heat exchanger is depressurized by the first air conditioning expansion valve to be an evaporation pressure depending on an outdoor temperature and absorbs heat from outdoor air through the air conditioning heat source-side heat exchanger and thereafter, flows back to the air conditioning compressor by passing through the air conditioning flow path switching valve. Such a dehumidifying operation is available in the air conditioner of the present invention.

As such, according to the present invention, even in a chiller type air conditioner, operations of four modes of cooling, heating, cooling subjective dehumidifying, and heating subjective dehumidifying may be performed by simple control without increasing facilities. In the air conditioner according to the present invention, since the first air conditioning user-side heat exchanger and the second air conditioning user-side heat exchanger may be efficiently used, energy saving performance is also excellent.

In the air conditioner according to the present invention, since the first air conditioning user-side heat exchanger and the second air conditioning user-side heat exchanger may be connected to the first air conditioning expansion valve in parallel, the temperatures (approach temperatures) of the air conditioning refrigerants that flow into the respective air conditioning user-side heat exchangers may be maintained as the same value. As a result, heat may be exchanged due to the same temperature difference between the air conditioning refrigerant that flows on the first air conditioning user-side heat exchanger and the second air conditioning user-side heat exchanger and the air conditioning user-side heat transfer medium. Accordingly, according to the air conditioner of the present invention, heat exchange efficiency may be improved.

In the air conditioner according to the present invention, a first flow path switching valve 64a for switching a flowing direction of the air conditioning user-side heat transfer medium is installed in the first air conditioning heat transfer medium circuit, a second flow path switching valve 64b for switching the flowing direction of the air conditioning user-side heat transfer medium is installed in the second air conditioning heat transfer medium circuit, a common pipe 65b used commonly with some of pipes constituting the second air conditioning heat transfer medium circuit is joined to some of pipes constituting the first air conditioning heat transfer medium circuit, and an air conditioning heat transfer medium circulation pump 67 for simultaneously circulating the air conditioning user-side heat transfer medium in both the first air conditioning heat transfer medium circuit and the second air conditioning heat transfer medium circuit is mounted on the common pipe, in the configuration.

In the air conditioner according to the present invention, since the first flow path switching valve is installed in the first air conditioning heat transfer medium circuit, a flowing direction of the air conditioning user-side heat transfer medium may be changed to correspond to a flowing direction of the air conditioning refrigerant that flows on the first air conditioning user-side heat exchanger. Accordingly, in the air conditioner according to the present invention, heat exchange efficiency in the first air conditioning user-side heat exchanger may be improved. Similarly, in the air conditioner according to the present invention, since the second flow path switching valve is installed in the second air conditioning heat transfer medium circuit, a flowing direction of the air conditioning user-side heat transfer medium may be changed to correspond to a flowing direction of the air conditioning refrigerant that flows on the second air conditioning user-side heat exchanger. Accordingly, in the air conditioner according to the present invention, heat exchange efficiency in the second air conditioning user-side heat exchanger may be improved.

In order to solve the problem, an air conditioning hot water supply system according to the present invention includes: an air conditioning refrigerant circuit 5 performing a cooling operation and a heating operation by switching the cooling operation and the heating operation; an air conditioning heat transfer medium circulation circuit 8 conditioning air of a cooled space 60; a hot water supplying refrigerant circuit 6 supplying hot water; an intermediate heat medium circuit 7 dissipating or absorbing heat with respect to the air conditioning refrigerant circuit and the hot water supplying refrigerant circuit by using a hot/cold heat source; an intermediate heat exchanger 23 exchanging heat among three fluids of an air conditioning refrigerant circulated in the air conditioning refrigerant circuit, a hot water supplying refrigerant circulated in the hot water supplying refrigerant circuit, and a heat source heat transfer medium circulated in the intermediate heat medium circuit; and a control device 1a controlling an operation, wherein the air conditioning refrigerant circuit 5 includes an air conditioning refrigerant main circuit 5a that is formed in a loop by sequentially connecting an air conditioning compressor 21, an air conditioning flow path switching valve 22, an air conditioning heat source-side heat exchanger 24 for exchanging heat with an air conditioning heat source-side heat transfer medium (for example, the air), a first air conditioning expansion valve 27a, and a first air conditioning user-side heat exchanger 28a for exchanging heat with an air conditioning user-side heat transfer medium (for example, water or brine) through a refrigerant pipe, a first air conditioning refrigerant branch way 5b bypassing the first air conditioning user-side heat exchanger 28a and a second air conditioning refrigerant branch way 5c bypassing the air conditioning heat source-side heat exchanger 24 are installed in the air conditioning refrigerant main circuit 5a, a second air conditioning user-side heat exchanger 28b for exchanging heat with the air conditioning user-side heat transfer medium (for example, water or brine) is installed on the first air conditioning refrigerant branch way 5b so as to connect with the first air conditioning user-side heat exchanger 28a in parallel, the air conditioning refrigerant main circuit 5a and the air conditioning refrigerant branch way 5b are connected through an air conditioning bypass pipe 29 so that the first air conditioning user-side heat exchanger 28a and the second air conditioning user-side heat exchanger 28b are connected in series, the intermediate heat exchanger and an air conditioning refrigerant flow rate control valve 26b for adjusting a flow rate of air conditioning refrigerant that flows on the intermediate heat exchanger are installed on the second air conditioning refrigerant branch way 5c, connection switching means 34a and 34b for switching the connection of the first air conditioning user-side heat exchanger and the second air conditioning user-side heat exchanger to serial connection and parallel connection are installed in the air conditioning refrigerant circuit 5, a second air conditioning expansion valve 27b is installed at a position between the first air conditioning user-side heat exchanger 28a and the second air conditioning user-side heat exchanger 28b of the air conditioning refrigerant circuit 5 while the first air conditioning user-side heat exchanger 28a and the second air conditioning user-side heat exchanger 28b are connected in series by the connection switching means 34a and 34b, the air conditioning heat transfer medium circulation circuit 8 includes a first air conditioning heat transfer medium circuit 8a formed in a loop by connecting the first air conditioning user-side heat exchanger 28a and a first indoor heat exchanger 61a installed in the cooled space 60 through a pipe and a second air conditioning heat transfer medium circuit 8b formed in a loop by connecting the second air conditioning user-side heat exchanger 28b and a second indoor heat exchanger 61b installed in the cooled space 60 through a pipe, water or brine is circulated in each of the first air conditioning heat transfer medium circuit 8a and the second air conditioning heat transfer medium circuit 8b as the air conditioning user-side heat transfer medium, the hot water supplying refrigerant circuit 6 includes a hot water supplying main circuit 6a that is formed in a loop by sequentially connecting a hot water supplying compressor 41, a hot water supplying user-side heat exchanger 42 exchanging heat with a hot water supplying user-side heat transfer medium, a hot water supplying expansion valve 43, and the intermediate heat exchanger 23 through a refrigerant pipe, a hot water supplying refrigerant branch way 6b bypassing the intermediate heat exchanger is installed in the hot water supplying refrigerant main circuit 6a, a hot water supplying heat source-side heat exchanger 44 for exchanging heat between a hot water supplying heat source-side heat transfer medium (for example, the air) and the hot water supplying refrigerant is installed on the hot water supplying refrigerant branch way 6b, and a heat storage tank 50 for storing hot heat or cold heat which the heat source heat transfer medium absorbs is installed in the intermediate heat medium circuit 7.

In the air conditioning hot water supply system according to the present invention, the control device 1a executes a dehumidifying operation by the air conditioning refrigerant circuit by connecting the first air conditioning user-side heat exchanger and the second air conditioning user-side heat exchanger in series by operating the connection switching means and controls an opening level of the air conditioning refrigerant flow rate control valve according to a reheating amount heat-exchanged in the first indoor heat exchanger or the second indoor heat exchanger, in the configuration.

The air conditioning hot water supply system according to the present invention includes, in the configuration: a solar heat circulation circuit 10 formed in a loop by connecting a solar heat collector 4 collecting solar heat and the heat storage tank through a pipe; and a solar heat indirect circulation circuit 12 formed in a loop by connecting at least one of the first air conditioning heat transfer medium circuit and the second air conditioning heat transfer medium circuit and the heat storage tank through a pipe, wherein a solar heat transfer medium circulated in the solar heat circulation circuit and the air conditioning user-side heat transfer medium circulated in the solar heat indirect circulation circuit are configured to exchange heat each other through the heat storage tank.

According to the air conditioning hot water supply system of the present invention, since the second air conditioning expansion valve is installed, for example, in the cooling operation, a depressurization amount and a flow rate of the air conditioning refrigerant are controlled by the first air conditioning expansion valve, the air conditioning heat source-side heat exchanger may be made to serve as a condenser by fully opening the second air conditioning expansion valve, and both the first air conditioning user-side heat exchanger and the second air conditioning user-side heat exchanger may be made to serve as an evaporator.

According to the air conditioning hot water supply system of the present invention, in the heating operation, the depressurization amount and the flow rate of the air conditioning refrigerant are controlled by the first air conditioning expansion valve, both the first air conditioning user-side heat exchanger and the second air conditioning user-side heat exchanger may be made to serve as the condensers by fully opening the second air conditioning expansion valve and the air conditioning heat source-side heat exchanger may be made to serve as the evaporator.

According to the air conditioning hot water supply system of the present invention, in the dehumidifying operation, the first air conditioning expansion valve is fully opened and the second air conditioning expansion valve is controlled to perform the following operation. For example, when a cooling and dehumidifying load is comparatively high, the air conditioning flow path switching valve is switched to a cooling side and the air conditioning heat source-side heat exchanger is made to serve as the condenser. In this case, an outdoor fan is controlled so that a heat dissipation amount dissipated to the air conditioning heat source-side heat exchanger is a heat dissipation amount corresponding to a reheating amount generated by reheating air after cooling and dehumidifying. The air conditioning refrigerant passing through the air conditioning heat source-side heat exchanger makes the first air conditioning user-side heat exchanger serve as the condenser to dissipate heat to the air conditioning user-side heat transfer medium. Thereafter, the air conditioning refrigerant passes through the air conditioning bypass pipe and then passes through the second air conditioning expansion valve to be depressurized and expanded. The air conditioning refrigerant passing through the second air conditioning expansion valve absorbs heat from the air conditioning user-side heat transfer medium through the second air conditioning user-side heat exchanger and flows back to the air conditioning compressor by passing through the air conditioning flow path switching valve. Such a dehumidifying operation is available in the air conditioning hot water supply system according to the present invention.

In the air conditioning hot water supply system according to the present invention, the air conditioning flow path switching valve is switched to a heating side, and the first air conditioning expansion valve and the second air conditioning expansion valve are controlled to perform the dehumidifying operation having a comparatively small dehumidifying load and suitable for a load pattern as if there is a heating load. In this case, the second air conditioning user-side heat exchanger is made to serve as the condenser, such that the air conditioning refrigerant dissipates heat to the air conditioning user-side heat transfer medium through the second air conditioning user-side heat exchanger to be cooled. The air conditioning refrigerant passing through the second air conditioning user-side heat exchanger is depressurized by the second air conditioning expansion valve and absorbs heat from the air conditioning user-side heat transfer medium through the first air conditioning user-side heat exchanger. In this case, a depressurization amount of the second air conditioning expansion valve is controlled to be a depressurization amount depending on the dehumidifying amount. The air conditioning refrigerant passing through the first air conditioning user-side heat exchanger is depressurized by the first air conditioning expansion valve to be an evaporation pressure depending on an outdoor temperature, absorbs heat from outdoor air through the air conditioning heat source-side heat exchanger and thereafter, flows back to the air conditioning compressor by passing through the air conditioning flow path switching valve. Such a dehumidifying operation is available in the air conditioning hot water supply system according to the present invention.

As such, according to the air conditioning hot water supply system of the present invention, operations of four modes of cooling, heating, cooling subjective dehumidifying, and heating subjective dehumidifying may be performed by simple control without increasing facilities. In the air conditioning hot water supply system according to the present invention, since the air conditioning user-side heat exchanger and the second air conditioning user-side heat exchanger may be efficiently used, energy saving performance is also excellent.

In the air conditioning hot water supply system according to the present invention, since the first air conditioning user-side heat exchanger and the second air conditioning user-side heat exchanger may be connected to the first air conditioning expansion valve in parallel, the temperatures (approach temperatures) of the air conditioning refrigerants that flow into the respective air conditioning user-side heat exchangers may be maintained as the same value. As a result, heat may be exchanged due to the same temperature difference between the air conditioning refrigerant that flows on the first air conditioning user-side heat exchanger and the second air conditioning user-side heat exchanger and the air conditioning user-side heat transfer medium. Accordingly, according to the present invention, heat exchange efficiency may be improved.

In the air conditioning hot water supply system according to the present invention, since air conditioning exhaust heat may be used for a hot water supply cycle, heat energy may be effectively used. Since an opening level of the air conditioning refrigerant flow rate control valve is controlled according to the reheating amount heat-exchanged by the first indoor heat exchanger or the second indoor heat exchanger by the control device, a heat dissipation amount to outdoor air may be suppressed to be minimum. In the air conditioning hot water supply system according to the present invention, since the solar heat and the air conditioning user-side heat transfer medium may exchange heat by the solar heat indirect circulation circuit, energy saving performance is improved. As such, in the air conditioning hot water supply system according to the present invention, power consumption may be reduced and the energy saving performance may be improved in the entire system.

### ADVANTAGEOUS EFFECT OF INVENTION

The air conditioner and the air conditioning hot water supply system according to the present invention can perform the dehumidifying operation in one cooling cycle without increasing the facility cost. The air conditioner and the air conditioning hot water supply system according to the present invention can simply control the operation, and reduce power consumption and improve energy saving performance.

### BRIEF DESCRIPTION OF DRAWINGS

FIG. 1 is a systematic diagram of an air conditioner according to an embodiment of the present invention.
FIG. 2 is an operational diagram illustrating a flow of refrigerant and a heat transfer medium in operation mode No. 1 of the air conditioner illustrated in FIG. 1.
FIG. 3 is an operational diagram illustrating a flow of refrigerant and a heat transfer medium in operation mode No. 2 of the air conditioner illustrated in FIG. 1.
FIG. 4 is an operational diagram illustrating a flow of refrigerant and a heat transfer medium in operation mode No. 3 of the air conditioner illustrated in FIG. 1.
FIG. 5 is a pressure-specific enthalpy line diagram of operation mode No. 3 illustrated in FIG. 4.
FIG. 6 is an operational diagram illustrating a flow of refrigerant and a heat transfer medium in operation mode No. 4 of the air conditioner illustrated in FIG. 1.
FIG. 7 is a pressure-specific enthalpy line diagram of operation mode No. 4 illustrated in FIG. 6.
FIG. 8 is a diagram for describing a state of each device in operation modes No. 1 to No. 4 of the air conditioner illustrated in FIG. 1.
FIG. 9 is a systematic diagram of an air conditioning hot water supply system according to a first embodiment of the present invention.
FIG. 10 is an operational diagram illustrating a flow of refrigerant and a heat transfer medium in operation pattern No. 1 of the air conditioning hot water supply system illustrated in FIG. 9.
FIG. 11 is an operational diagram illustrating a flow of refrigerant and a heat transfer medium in operation pattern No. 2 of the air conditioning hot water supply system illustrated in FIG. 9.
FIG. 12 is an operational diagram illustrating a flow of refrigerant and a heat transfer medium in operation pattern No. 3 of the air conditioning hot water supply system illustrated in FIG. 9.
FIG. 13 is a systematic diagram of an air conditioning hot water supply system according to a second embodiment of the present invention.

### DESCRIPTION OF EMBODIMENTS

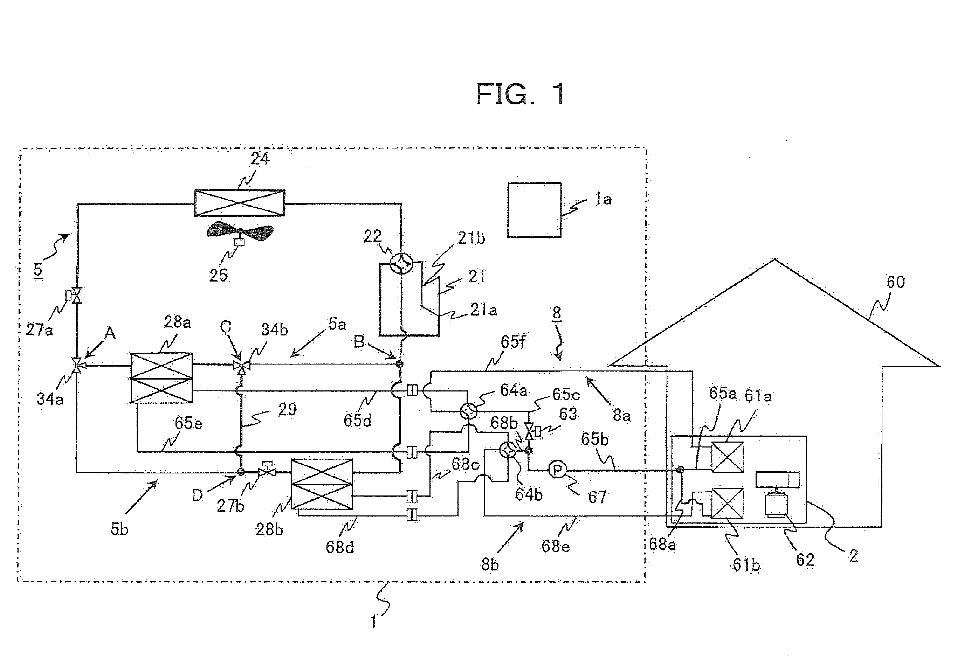

First, a configuration of an air conditioner according to an embodiment of the present invention will be described with reference to FIG. 1.

As illustrated in FIG. 1, the air conditioner 1 according to the embodiment of the present invention includes an air conditioning refrigerant circuit 5 performed by switching a cooling operation and a heating operation and an air conditioning cold/hot water circulation circuit (an air conditioning heat transfer medium circulation circuit) 8 conditioning indoor air of a housing (a cooled space) 60. The air conditioner 1 is placed outdoors. Meanwhile, an indoor unit 2 connected with the air conditioner 1 is placed in the housing 60. The indoor unit 2 is configured to include a first indoor heat exchanger 61a, a second indoor heat exchanger 61b, and an indoor fan 62.

The air conditioning refrigerant circuit 5 which is a circuit where refrigerant for conditioning air is circulated is formed in a loop by connecting an air conditioning compressor 21 compressing the refrigerant for conditioning air, a 4-way valve (air conditioning flow path switching valve) 22 switching a flow path of the refrigerant for conditioning air, an air conditioning heat source-side heat exchanger 24 exchanging heat with air sent by a fan 25, a first air conditioning expansion valve 27a and a second air conditioning expansion valve 27b depressurizing the refrigerant for conditioning air, and a first air conditioning user-side heat exchanger 28a and a second air conditioning user-side heat exchanger 28b exchanging heat with the air conditioning cold/hot water circulation circuit 8 through a refrigerant pipe. A cooling cycle (air conditioning cycle) for conditioning air is formed by the air conditioning refrigerant circuit 5.

The air conditioning compressor 21 is a variable capacity compressor in which a capacity is controllable. As such a compressor, a piston-type compressor, a rotary-type compressor, a scroll-type compressor, a screw-type compressor, and a centrifugal-type compressor may be adopted. In detail, the air conditioning compressor 21 is the scroll-type compressor in which the capacity may be controlled by inverter controlling and a rotational speed is varied from a low speed up to a high speed.

Subsequently, a configuration of the air conditioning refrigerant circuit 5 will be described in detail. The air conditioning refrigerant circuit 5 first includes an air conditioning refrigerant main circuit 5a formed in a loop by connecting a discharge port 21b of the air conditioning compressor 21, the 4-way valve 22, the air conditioning heat source-side heat exchanger 24, the first air conditioning expansion valve 27a, the first air conditioning user-side heat exchanger 28a, the 4-way valve 22, and a suction port 21a of the air conditioning compressor 21 in sequence through the refrigerant pipe.

The air conditioning refrigerant circuit 5 is configured by installing a first air conditioning refrigerant branch way 5b and an air conditioning bypass pipe 29 to be described below, in the air conditioning refrigerant main circuit 5a.

The first air conditioning refrigerant branch way 5b is an air conditioning refrigerant branch way that bypasses the first air conditioning user-side heat exchanger 28a and in detail, is an air conditioning refrigerant branch way formed by connecting a branch point A positioned between the first air conditioning user-side heat exchanger 28a and the first air conditioning expansion valve 27a and a branch point B positioned between the first air conditioning user-side heat exchanger 28a and the 4-way valve 22 through the refrigerant pipe. The second air conditioning user-side heat exchanger 28b is installed on the first air conditioning refrigerant branch way 5b and a 3-way valve 34a is installed at the branch point A.

A 3-way valve 34b is installed at a branch point C formed between the first air conditioning user-side heat exchanger 28a and the branch point B in the air conditioning refrigerant main circuit 5a. The branch point C of the air conditioning refrigerant main circuit 5a and a branch point D positioned between the second air conditioning user-side heat exchanger 28b and the branch point A on the first air conditioning refrigerant branch way 5b are connected through the air conditioning bypass pipe 29.

Therefore, the first air conditioning user-side heat exchanger 28a and the second air conditioning user-side heat exchanger 28b are connected to the first air conditioning expansion valve 27a and the 4-way valve 22 in parallel to each other and connected in series to each other through the air conditioning bypass pipe 29.

While the first air conditioning user-side heat exchanger 28a and the second air conditioning user-side heat exchanger 28b are connected in series, the second air conditioning expansion valve 27b is installed between the first air conditioning user-side heat exchanger 28a and the second air conditioning user-side heat exchanger 28b. In more detail, the second air conditioning expansion valve 27b is mounted between a position (that is, the branch point D) where the air conditioning bypass pipe 29 is connected with the first air conditioning refrigerant branch way 5b and the second air conditioning user-side heat exchanger 28b.

According to the air conditioning refrigerant circuit 5 configured as above, the connection of the first air conditioning user-side heat exchanger 28a and the second air conditioning user-side heat exchanger 28b is switched to any one of the serial connection and the parallel connection by operating the 3-way valve 34a and the 3-way valve 34b. Therefore, as the flow path of the refrigerant for conditioning air, two flow paths of a flow path where the air conditioning refrigerant flows dividedly into both the first air conditioning user-side heat exchanger 28a and the second air conditioning user-side heat exchanger 28b and a flow path where the air conditioning refrigerant flows sequentially from one side to the other side of the first air conditioning user-side heat exchanger 28a and the second air conditioning user-side heat exchanger 28b are formed. Herein, the 3-way valve 34a and the 3-way valve 34b in the embodiment correspond to a connection switching means of the present invention.

As the air conditioning refrigerant which is circulated in the air conditioning refrigerant circuit 5, for example, R410a, R134a, HFO1234yf, HFO1234ze, CO2, and C3H8 may be used.

Subsequently, the air conditioning cold/hot water circulation circuit (air conditioning heat transfer medium circulation circuit) 8 includes a first air conditioning cold/hot water circuit (first air conditioning heat transfer medium circuit) 8a formed in a loop by connecting the first indoor heat exchanger 61a and the first air conditioning user-side heat exchanger 28a through a pipe and a second air conditioning cold/hot water circuit (second air conditioning heat transfer medium circuit) 8b formed in a loop by connecting the second indoor heat exchanger 61b and the second air conditioning user-side heat exchanger 28b through the pipe. A heat transfer medium that flows on the first air conditioning cold/hot water circuit 8a and the second air conditioning cold/hot water circuit 8b is water (cold water or hot water), but when the heat transfer medium is used in a cold region, brine such as ethylene glycol may be used instead of water.

Herein, it is additionally remarked, in the following description, that a term, "cold water" or "hot water" may be used as the water that flows on the air conditioning cold/hot water circulation circuit 8, but it is additionally remarked that the "cold water" is used as a meaning of the water that flows on the air conditioning cold/hot water circulation circuit 8 in cooling and the "hot water" is used as a meaning of the water that flows on the air conditioning cold/hot water circulation circuit 8 in heating.

The first air conditioning cold/hot water circuit 8a is a circuit formed in a loop by sequentially connecting a first indoor heat exchanger 61a installed in the housing 60, an air conditioning cold/hot water circulation pump (air conditioning heat transfer medium circulation pump) 67, a control valve 63, a 4-way valve (first flow path switching valve) 64a, and the first air conditioning user-side heat exchanger 28a through air conditioning cold/hot water pipes 65a to 65f. In more detail, the first indoor heat exchanger 61a and the 4-way valve 64a are connected through the air conditioning cold/hot water pipes 65a, 65b, and 65c and the air conditioning cold/hot water circulation pump 67 is mounted on the air conditioning cold/hot water pipe 65b. The air conditioning cold/hot water pipe 65b is a common pipe used as a part of the air conditioning cold/hot water pipes constituting the second air conditioning cold/hot water circuit 8b. The 4-way valve 64a and the first air conditioning user-side heat exchanger 28a are connected in a loop through the air conditioning cold/hot water pipes 65d and 65e, and the 4-way valve 64a and the first indoor heat exchanger 61a are connected through the air conditioning cold/hot water pipe 65f. The control valve 63 installed on the air conditioning cold/hot water pipe 65c is used to adjust the amount of the water that flows on the first air conditioning user-side heat exchanger 28a and the second air conditioning user-side heat exchanger 28b.

According to the first air conditioning cold/hot water circuit 8a configured as above, water sent by the air conditioning cold/hot water circulation pump 67 flows on the first air conditioning user-side heat exchanger 28a and subsequently, after flowing on the first indoor heat exchanger 61a, the water returns to the air conditioning cold/hot water circulation pump 67 again through the air conditioning cold/hot water pipe (common pipe) 65b. When the flow path of the water is switched by operating the 4-way valve 64a, a flowing direction of the water that flows on the first air conditioning user-side heat exchanger 28a may be changed. That is, by installing the 4-way valve 64a, air conditioning refrigerant and water that flows on the first air conditioning user-side heat exchanger 28a may be countercurrents.

Meanwhile, the second air conditioning cold/hot water circuit 8b is a circuit formed in a loop by sequentially connecting the second indoor heat exchanger 61b installed in the housing 60, the air conditioning cold/hot water circulation pump 67, the 4-way valve (second flow path switching valve) 64b, and the second air conditioning user-side heat exchanger 28b through the air conditioning cold/hot water pipes 68a to 68e and the air conditioning cold/hot water pipe 65b. In more detail, the second indoor heat exchanger 61b and the 4-way valve 64b are connected through the air conditioning cold/hot water pipes 68a, 65b, and 68b and the air conditioning cold/hot water circulation pump 67 is mounted on the air conditioning cold/hot water pipe 65b. The air conditioning cold/hot water pipe 65b is a common pipe used as a part of the air conditioning cold/hot water pipes constituting the first air conditioning cold/hot water circuit 8a. The 4-way valve 64b and the second air conditioning user-side heat exchanger 28b are connected in a loop through the air conditioning cold/hot water pipes 68c and 68d, and the 4-way valve 64b and the second indoor heat exchanger 61b are connected through the air conditioning cold/hot water pipe 68e.

According to the second air conditioning cold/hot water circuit 8b configured as above, the water sent by the air conditioning cold/hot water circulation pump 67 flows on the second air conditioning user-side heat exchanger 28b and subsequently, after flowing on the second indoor heat exchanger 61b, the water returns to the air conditioning cold/hot water circulation pump 67 again through the air conditioning cold/hot water pipe (common pipe) 65b. When the flow path of the water is switched by operating the 4-way valve 64b, a flowing direction of the water that flows on the second air conditioning user-side heat exchanger 28b may be changed. That is, by installing the 4-way valve 64b, air conditioning refrigerant and water that flows on the second air conditioning user-side heat exchanger 28b may be countercurrents.

A thermometer or a flowmeter which is not illustrated is appropriately installed in the air conditioning refrigerant circuit 5 and the air conditioning cold/hot water circulation circuit 8 constituting the air conditioner 1. A detection signal of the thermometer or the flowmeter is introduced into a control device 1a installed in the air conditioner 1. The control device 1a inputs an operation signal of a remote controller not illustrated and signals of each thermometer and each flowmeter and controls operations of various devices (the compressor, the pump, the fan, the expansion valve, the control valve, the 4-way valve, the 3-way valve, and the like) mounted on the respective circuits 5 and 8 based on the signals.

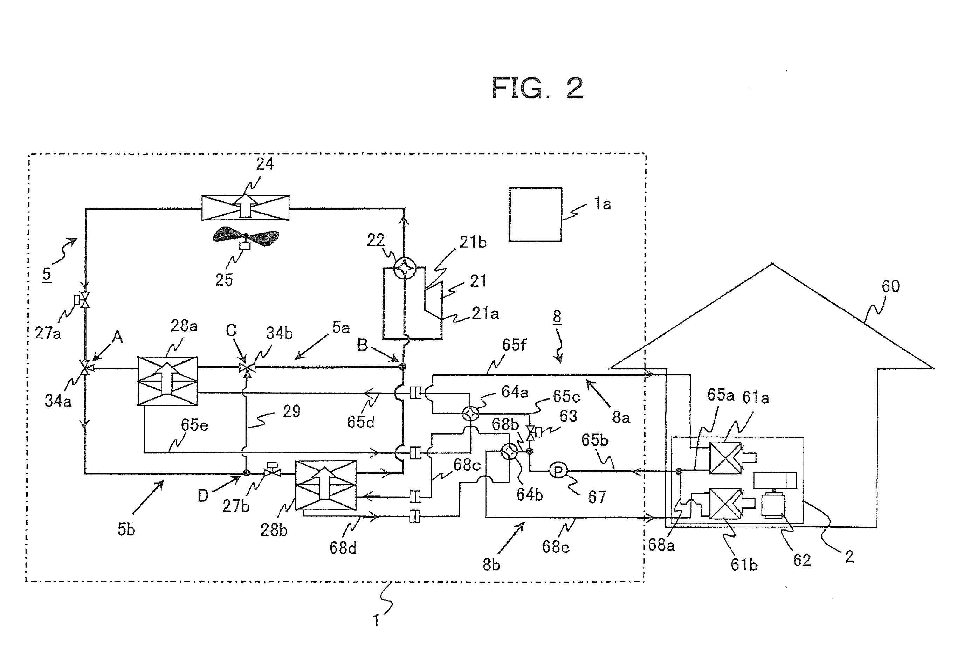

Continuously, various operation modes performed by the air conditioner 1 will be described with reference to FIGS. 2 to 8. Herein, in FIGS. 2 to 4 and 6, an arrow given to each heat exchanger illustrates a flow of heat and arrows given to the air conditioning refrigerant circuit 5 and the air conditioning cold/hot water circulation circuit 8 illustrate directions in which a fluid flows on the respective circuits. In FIGS. 2 to 4 and 6, all of three ports in a white 3-way valve are opened, and in a 3-way valve in which two of three ports remain white and one port is black, the white ports are opened and the black port is closed. In FIGS. 2 to 4 and 6, an arc-shaped solid line drawn in the 4-way valve indicates a flow path of the fluid that flows on the 4-way valve. A thick arrow in the figures indicates the flowing direction of the heat.

### "Operation mode No. 1 <Cooling operation>" (see FIG. 2)

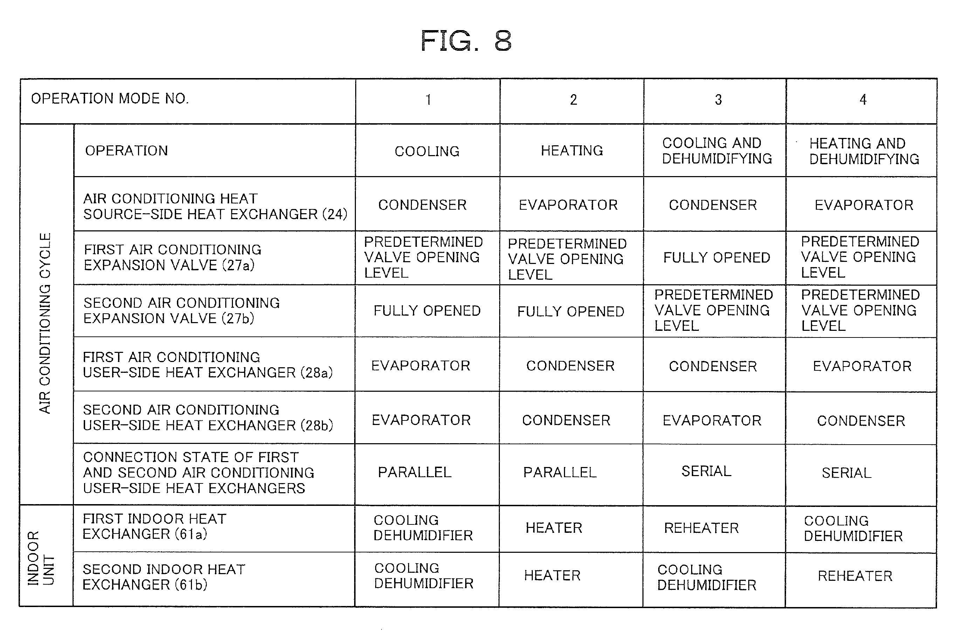

Operation mode No. 1 is a mode to perform the cooling operation. In Operation mode No. 1, the air conditioning heat source-side heat exchanger 24 is used as a condenser, and the first air conditioning user-side heat exchanger 28a and the second air conditioning user-side heat exchanger 28b are used as evaporators, as illustrated in a column of "Operation mode No. 1" of FIG. 8. In Operation mode No. 1, the first air conditioning user-side heat exchanger 28a and the second air conditioning user-side heat exchanger 28b are connected in parallel by the 3-way valve 34a and the 3-way valve 34b. In Operation mode No. 1, the first air conditioning expansion valve 27a is controlled at a predetermined valve opening level and the second air conditioning expansion valve 27b is fully opened.

In the air conditioning refrigerant circuit 5, high-temperature and high-pressure gas refrigerant discharged from the discharge port 21b of the air conditioning compressor 21 flows into the air conditioning heat source-side heat exchanger 24 through the 4-way valve 22. The high-temperature and high-pressure gas refrigerant that flows into the air conditioning heat source-side heat exchanger 24 dissipates heat to the air to be condensed and liquefied. High-pressure liquid refrigerant that flows out from the air conditioning heat source-side heat exchanger 24 is depressurized to be an evaporation pressure depending on cooling and dehumidifying loads in the housing 60 by using the first air conditioning expansion valve 27a and becomes low-temperature and low-pressure vapor-liquid two-phase refrigerant. The vapor-liquid two-phase refrigerant flows dividedly into the first air conditioning user-side heat exchanger 28a and the second air conditioning user-side heat exchanger 28b through the 3-way valve 34a. The vapor-liquid two-phase refrigerant that flows on the first air conditioning user-side heat exchanger 28a absorbs heat from the cold water that flows on the first air conditioning cold/hot water circuit 8a to be evaporated and becomes low-pressure gas refrigerant. Similarly, the vapor-liquid two-phase refrigerant that flows on the second air conditioning user-side heat exchanger 28b absorbs heat from the cold water that flows on the second air conditioning cold/hot water circuit 8b to be evaporated and becomes the low-pressure gas refrigerant. The gas refrigerant that flows out from the first air conditioning user-side heat exchanger 28a and the gas refrigerant that flows out from the second air conditioning user-side heat exchanger 28b meet at the branch point B and thereafter, flow into the suction port 21a of the air conditioning compressor 21 through the 4-way valve 22 and are compressed by the air conditioning compressor 21 again to become the high-temperature and high-pressure gas refrigerant.

In the first air conditioning cold/hot water circuit 8a, by driving the air conditioning cold/hot water circulation pump 67, the cold water that dissipates heat to the air conditioning refrigerant that flows on the first air conditioning user-side heat exchanger 28a flows on the air conditioning cold/hot water pipe 65e and passes through the 4-way valve 64a and thereafter, flows into the first indoor heat exchanger 61a. In the first indoor heat exchanger 61a, the cold water in the first air conditioning cold/hot water circuit 8a and high-temperature air in the housing 60 exchange heat each other and the air of the housing 60 is cooled and dehumidified. That is, the first indoor heat exchanger 61a is used as a cooling dehumidifier. In this case, the cold water that flows on the first indoor heat exchanger 61a absorbs heat from the air in the housing 60 to increase in temperature thereof. The temperature-increasing cold water flows on the air conditioning cold/hot water pipe 65b used commonly with the second air conditioning cold/hot water circuit 8b to return to the air conditioning cold/hot water circulation pump 67 and dissipates heat to the air conditioning refrigerant to be cooled through the first air conditioning user-side heat exchanger 28a again.

In the second air conditioning cold/hot water circuit 8b, by driving the air conditioning cold/hot water circulation pump 67, the cold water that dissipates heat to the air conditioning refrigerant that flows on the second air conditioning user-side heat exchanger 28b flows on the air conditioning cold/hot water pipe 68d and passes through the 4-way valve 64b and thereafter, flows into the second indoor heat exchanger 61b. In the second indoor heat exchanger 61b, the cold water in the second air conditioning cold/hot water circuit 8b and the high-temperature air in the housing 60 exchange heat each other and the air of the housing 60 is cooled and dehumidified. That is, the second indoor heat exchanger 61b is used as the cooling dehumidifier. In this case, the cold water that flows on the second indoor heat exchanger 61b absorbs heat from the air in the housing 60 to rise in temperature thereof. The temperature-increasing cold water flows on the air conditioning cold/hot water pipe 65b used commonly with the first air conditioning cold/hot water circuit 8a to return to the air conditioning cold/hot water circulation pump 67 and dissipates heat to the air conditioning refrigerant to be cooled through the second air conditioning user-side heat exchanger 28b again.

In Operation mode No. 1, since the air conditioning refrigerant flows into the first air conditioning user-side heat exchanger 28a and the second air conditioning user-side heat exchanger 28b at the same approach temperature, both the first air conditioning user-side heat exchanger 28a and the second air conditioning user-side heat exchanger 28b may exchange heat under a condition that a difference in temperature between the air conditioning refrigerant and the cold water is the same. Therefore, according to Operation mode No. 1, heat exchange efficiency is improved. Even in regard to the first indoor heat exchanger 61a and the second indoor heat exchanger 61b, the heat exchange efficiency is improved for the same reason.

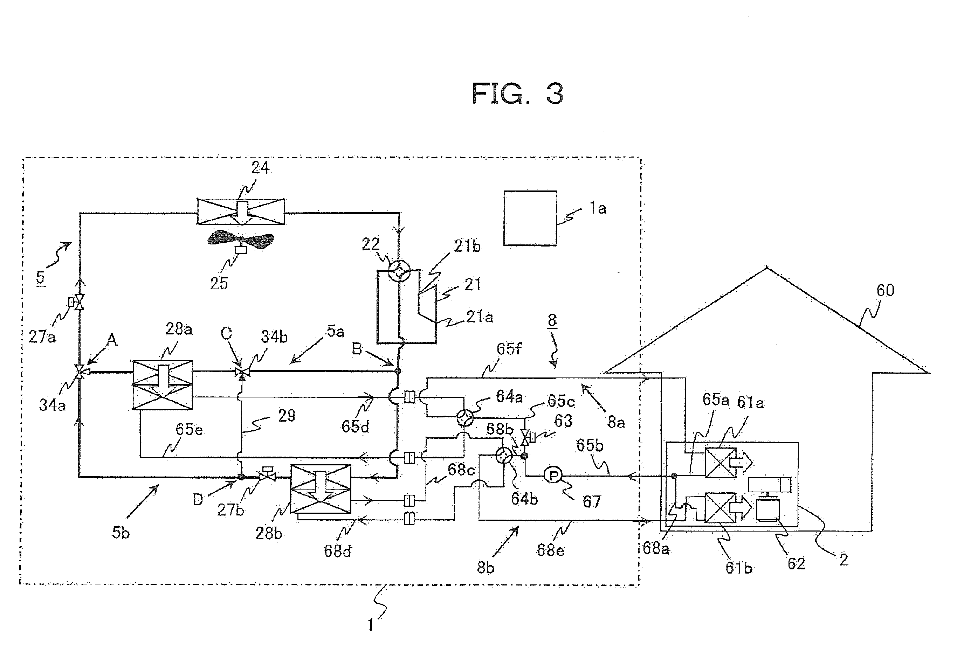

### "Operation mode No. 2 <Heating operation>" (see FIG. 3)

Operation mode No. 2 is a mode to perform the heating operation. In Operation mode No. 2, the air conditioning heat source-side heat exchanger 24 is used as the evaporator, and the first air conditioning user-side heat exchanger 28a and the second air conditioning user-side heat exchanger 28b are used as the condensers, as illustrated in a column of "Operation mode No. 2" of FIG. 8. In Operation mode No. 2, the first air conditioning user-side heat exchanger 28a and the second air conditioning user-side heat exchanger 28b are connected in parallel by the 3-way valve 34a and the 3-way valve 34b. In Operation mode No. 2, the first air conditioning expansion valve 27a is controlled at a predetermined valve opening level and the second air conditioning expansion valve 27b is fully opened.

In the air conditioning refrigerant circuit 5, the high-temperature and high-pressure gas refrigerant discharged from the discharge port 21b of the air conditioning compressor 21 passes through the 4-way valve 22 and flows dividedly into the first air conditioning user-side heat exchanger 28a and the second air conditioning user-side heat exchanger 28b from the branch point B. The high-temperature and high-pressure gas refrigerant that flows on the first air conditioning user-side heat exchanger 28a dissipates heat to hot water that flows on the first air conditioning cold/hot water circuit 8a to be condensed and liquefied. Similarly, the high-temperature and high-pressure gas refrigerant that flows on the second air conditioning user-side heat exchanger 28b dissipates heat to hot water that flows on the second air conditioning cold/hot water circuit 8b to be condensed and liquefied. Liquid refrigerant that flows out from the first air conditioning user-side heat exchanger 28a and liquid refrigerant that flows out from the second air conditioning user-side heat exchanger 28b meet at the branch point A and thereafter, are depressurized to be an evaporation pressure depending on an outdoor air temperature by using the first air conditioning expansion valve 27a and become low-temperature and low-pressure vapor-liquid two-phase refrigerant and flow into the air conditioning heat source-side heat exchanger 24. The vapor-liquid two-phase refrigerant that flows into the air conditioning heat source-side heat exchanger 24 absorbs heat from the air to be evaporated and become low-pressure gas refrigerant. The low-pressure gas refrigerant flows into the suction port 21a of the air conditioning compressor 21 through the 4-way valve 22 and is compressed by the air conditioning compressor 21 again to become the high-temperature and high-pressure gas refrigerant.

In the first air conditioning cold/hot water circuit 8a, by driving the air conditioning cold/hot water circulation pump 67, the hot water that absorbs heat from the air conditioning refrigerant that flows on the first air conditioning user-side heat exchanger 28a flows on the air conditioning cold/hot water pipe 65d and passes through the 4-way valve 64a and thereafter, flows into the first indoor heat exchanger 61a. In the first indoor heat exchanger 61a, the hot water in the first air conditioning cold/hot water circuit 8a and low-temperature air in the housing 60 exchange heat each other and the air of the housing 60 is heated. That is, the first indoor heat exchanger 61a is used as a heater. In this case, the hot water that flows on the first indoor heat exchanger 61a dissipates heat to the air in the housing 60 to be cooled. The cooled hot water flows on the air conditioning cold/hot water pipe 65b used commonly with the second air conditioning cold/hot water circuit 8b to return to the air conditioning cold/hot water circulation pump 67 and absorbs heat from the air conditioning refrigerant in the first air conditioning user-side heat exchanger 28a again to rise in temperature thereof.

In the second air conditioning cold/hot water circuit 8b, by driving the air conditioning cold/hot water circulation pump 67, the hot water that absorbs heat from the air conditioning refrigerant that flows on the second air conditioning user-side heat exchanger 28b flows on the air conditioning cold/hot water pipe 68c and passes through the 4-way valve 64b and thereafter, flows into the second indoor heat exchanger 61b. In the second indoor heat exchanger 61b, the hot water in the second air conditioning cold/hot water circuit 8b and the low-temperature air in the housing 60 exchange heat each other and the air of the housing 60 is heated. That is, the second indoor heat exchanger 61b is used as the heater. In this case, the hot water that flows on the second indoor heat exchanger 61b dissipates heat to the air in the housing 60 to be cooled. The cooled hot water flows on the air conditioning cold/hot water pipe 65b used commonly with the first air conditioning cold/hot water circuit 8a to return to the air conditioning cold/hot water circulation pump 67 and absorbs heat from the air conditioning refrigerant in the second air conditioning user-side heat exchanger 28b again to rise in temperature thereof.

In Operation mode No. 2, since the air conditioning refrigerant flows into the first air conditioning user-side heat exchanger 28a and the second air conditioning user-side heat exchanger 28b at the same approach temperature, both the first air conditioning user-side heat exchanger 28a and the second air conditioning user-side heat exchanger 28b may exchange heat under a condition that a difference in temperature between the air conditioning refrigerant and the hot water is the same. Therefore, according to Operation mode No. 1, the heat exchange efficiency is improved. Even in regard to the first indoor heat exchanger 61a and the second indoor heat exchanger 61b, the heat exchange efficiency is improved for the same reason.

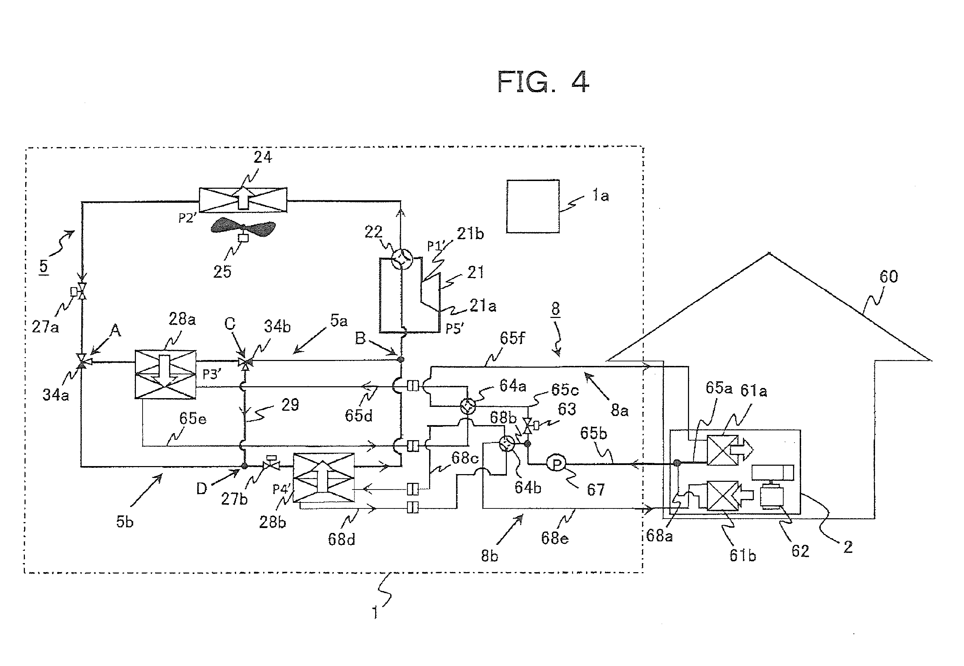

### "Operation mode No. 3 <Cooling and dehumidifying operations>" (see FIG. 4)

Operation mode No. 3 is a mode to perform the cooling and dehumidifying operations (cooling subjective dehumidifying operation). In Operation mode No. 3, the air conditioning heat source-side heat exchanger 24 and the first air conditioning user-side heat exchanger 28a are used as the condensers, and the second air conditioning user-side heat exchanger 28b is used as the evaporator, as illustrated in a column of "Operation mode No. 3" of FIG. 8. In Operation mode No. 3, the first air conditioning user-side heat exchanger 28a and the second air conditioning user-side heat exchanger 28b are connected in series by the 3-way valve 34a and the 3-way valve 34b. In Operation mode No. 3, the first air conditioning expansion valve 27a is fully opened and the second air conditioning expansion valve 27b is controlled at a predetermined valve opening level.

In the air conditioning refrigerant circuit 5, the high-temperature and high-pressure gas refrigerant discharged from the discharge port 21b of the air conditioning compressor 21 flows into the air conditioning heat source-side heat exchanger 24 through the 4-way valve 22. The high-temperature and high-pressure gas refrigerant that flows into the air conditioning heat source-side heat exchanger 24 dissipates heat to the air and dissipates heat to the cold water that flows on the first air conditioning cold/hot water circuit 8a in the first air conditioning user-side heat exchanger 28a to be condensed and liquefied. In this case, the rotational speed of the fan 25 is controlled to be a heat dissipation amount depending on a reheating amount (an exchanged heat amount performed by the first indoor heat exchanger 61a) in the dehumidifying operation. The liquefied low-temperature air conditioning refrigerant flows on the air conditioning bypass pipe 29 and thus depressurized and expanded to have an evaporation pressure depending on a cooling and dehumidifying amount by the second air conditioning expansion valve 27b to be the vapor-liquid two-phase refrigerant. The vapor-liquid two-phase refrigerant absorbs heat from the cold water that flows on the second air conditioning cold/hot water circuit 8b to be evaporated in the second air conditioning user-side heat exchanger 28b and becomes the low-pressure gas refrigerant. The low-pressure gas refrigerant flows into the suction port 21a of the air conditioning compressor 21 through the 4-way valve 22 and is compressed by the air conditioning compressor 21 again to become the high-temperature and high-pressure gas refrigerant.

In the first air conditioning cold/hot water circuit 8a, by driving the air conditioning cold/hot water circulation pump 67, the cold water that absorbs heat from the air conditioning refrigerant that flows on the first air conditioning user-side heat exchanger 28a flows on the air conditioning cold/hot water pipe 65e and passes through the 4-way valve 64a and thereafter, flows into the first indoor heat exchanger 61a. In the first indoor heat exchanger 61a, the air in the housing 60 is reheated by hot heat stored in the cold water in the first air conditioning cold/hot water circuit 8a. That is, the first indoor heat exchanger 61a is used as a reheater. In this case, the cold water that flows on the first indoor heat exchanger 61a dissipates heat to the air in the housing 60 to be cooled. The cooled cold water flows on the air conditioning cold/hot water pipe 65b used commonly with the second air conditioning cold/hot water circuit 8b to return to the air conditioning cold/hot water circulation pump 67 and absorbs heat from the air conditioning refrigerant in the first air conditioning user-side heat exchanger 28a again to rise in temperature thereof.

In the second air conditioning cold/hot water circuit 8b, by driving the air conditioning cold/hot water circulation pump 67, the cold water that dissipates heat to the air conditioning refrigerant that flows on the second air conditioning user-side heat exchanger 28b flows on the air conditioning cold/hot water pipe 68d and passes through the 4-way valve 64b and thereafter, flows into the second indoor heat exchanger 61b. In the second indoor heat exchanger 61b, the cold water in the second air conditioning cold/hot water circuit 8b and the high-temperature air in the housing 60 exchange heat each other and the air of the housing 60 is cooled and dehumidified. That is, the second indoor heat exchanger 61b is used as the cooling dehumidifier. In this case, the cold water that flows on the second indoor heat exchanger 61b absorbs heat from the air in the housing 60 to rise in temperature thereof. The temperature-increasing cold water flows on the air conditioning cold/hot water pipe 65b used commonly with the first air conditioning cold/hot water circuit 8a to return to the air conditioning cold/hot water circulation pump 67 and dissipates heat to the air conditioning refrigerant to be cooled through the second air conditioning user-side heat exchanger 28b again.

Herein, in the indoor unit 2, the air reheated by the first indoor heat exchanger 61a and the air cooled and dehumidified by the second indoor heat exchanger 61b are agitated by the indoor fan 62 to become air dehumidified at the same temperature as the indoor temperature. The air is ejected to an indoor part from an air outlet (not illustrated) of the indoor unit 2.

According to Operation mode No. 3, since the cooling and dehumidifying operations and the reheating operation may be simultaneously performed, fresh air may be provided to the indoor part of the housing 60.

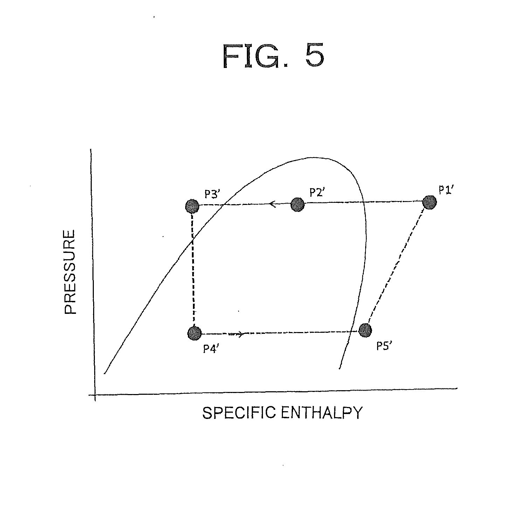

Operation mode No. 3 will be described below by using a pressure-specific enthalpy line diagram illustrated in FIG. 5. That is, the air conditioning refrigerant compressed and heated by the air conditioning compressor 21 is P1' and dissipates heat to the outdoor air and indoor air. The position of P2' is determined according to the indoor/outdoor heat dissipation amount and the air conditioning refrigerant passing through the air conditioning heat source-side heat exchanger 24 is changed to P2'. Thereafter, the air conditioning refrigerant dissipates heat to the cold water as the heat transfer medium through the first air conditioning user-side heat exchanger 28a to be P3', depressurized and expanded through the second air conditioning expansion valve 27b to be a state of P4', absorbs heat from the cold water as the heat transfer medium through the second air conditioning user-side heat exchanger 28b to be changed to P5', and forms a cycle that flows back to the suction port 21a of the air conditioning compressor 21. Therefore, a heat amount which may be used as the reheating amount becomes a heat amount between P1' and P3'. However, since heat is dissipated to the air conditioning heat source-side heat exchanger 24, the reheating amount may not be largely taken in Operation mode No. 3.

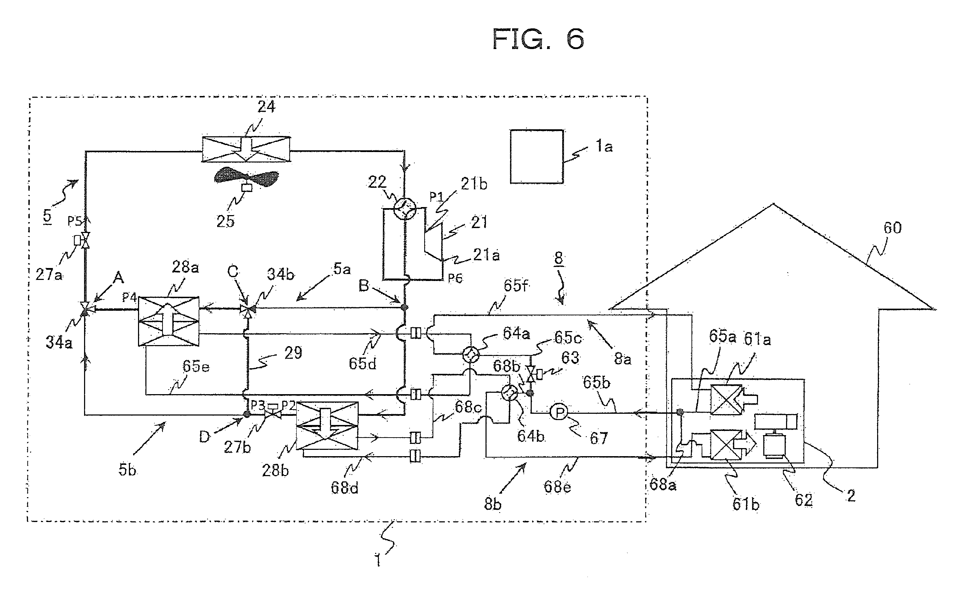

### "Operation mode No.4 <Heating and dehumidifying operations>" (see FIG. 6)

Operation mode No. 4 is a mode to perform the cooling and dehumidifying operations (heating subjective dehumidifying operation). In Operation mode No. 4, the air conditioning heat source-side heat exchanger 24 and the first air conditioning user-side heat exchanger 28a are used as the evaporators, and the second air conditioning user-side heat exchanger 28b is used as the condenser, as illustrated in a column of "Operation mode No. 4" of FIG. 8. In Operation mode No. 4, the first air conditioning user-side heat exchanger 28a and the second air conditioning user-side heat exchanger 28b are connected in series by the 3-way valve 34a and the 3-way valve 34b. In Operation mode No. 4, both the first air conditioning expansion valve 27a and the second air conditioning expansion valve 27b are controlled at a predetermined valve opening level.

In the air conditioning refrigerant circuit 5, the high-temperature and high-pressure gas refrigerant discharged from the discharge port 21b of the air conditioning compressor 21 flows into the second air conditioning user-side heat exchanger 28b through the 4-way valve 22. The high-temperature and high-pressure gas refrigerant that flows into the second air conditioning user-side heat exchanger 28b dissipates heat to the hot water that flows on the second air conditioning cold/hot water circuit 8b to be condensed and liquefied. The low-temperature liquid refrigerant is depressurized and expanded to be the evaporation pressure depending on a cooling and humidifying amount (the exchanged heat amount performed by the first indoor heat exchanger 61a) by the second air conditioning expansion valve 27b to be the vapor-liquid two-phase refrigerant. The vapor-liquid two-phase refrigerant flows on the air conditioning bypass pipe 29 and absorbs heat from the hot water that flows on the first air conditioning cold/hot water circuit 8a and is evaporated in the first air conditioning user-side heat exchanger 28a and thereafter, the vapor-liquid two-phase refrigerant is depressurized and expanded to be at the evaporation pressure depending on the outdoor temperature by the first air conditioning expansion valve 27a to flow into the air conditioning heat source-side heat exchanger 24. The air conditioning refrigerant that flows into the air conditioning heat source-side heat exchanger 24 absorbs heat from the air to become the low-pressure gas refrigerant. The low-pressure gas refrigerant flows into the suction port 21a of the air conditioning compressor 21 through the 4-way valve 22 and is compressed by the air conditioning compressor 21 again to become the high-temperature and high-pressure gas refrigerant.

In the first air conditioning cold/hot water circuit 8a, by driving the air conditioning cold/hot water circulation pump 67, the hot water that dissipates heat to the air conditioning refrigerant that flows on the first air conditioning user-side heat exchanger 28a flows on the air conditioning cold/hot water pipe 65d and passes through the 4-way valve 64a and thereafter, flows into the first indoor heat exchanger 61a. In the first indoor heat exchanger 61a, the hot water in the first air conditioning cold/hot water circuit 8a and high-temperature air in the housing 60 exchange heat each other and the air of the housing 60 is cooled and dehumidified. That is, the first indoor heat exchanger 61a is used as the cooling dehumidifier. In this case, the hot water that flows on the first indoor heat exchanger 61a absorbs heat from the air in the housing 60 to rise in temperature thereof. The temperature-increasing hot water flows on the air conditioning cold/hot water pipe 65b used commonly with the second air conditioning cold/hot water circuit 8b to return to the air conditioning cold/hot water circulation pump 67 and dissipates heat to the air conditioning refrigerant to be cooled through the first air conditioning user-side heat exchanger 28a.

In the second air conditioning cold/hot water circuit 8b, by driving the air conditioning cold/hot water circulation pump 67, the hot water that absorbs heat from the air conditioning refrigerant that flows on the second air conditioning user-side heat exchanger 28b flows on the air conditioning cold/hot water pipe 68d and passes through the 4-way valve 64b and thereafter, flows into the second indoor heat exchanger 61b. In the second indoor heat exchanger 61b, the air in the housing 60 is reheated by the hot heat stored in the hot water in the second air conditioning cold/hot water circuit 8b. That is, the second indoor heat exchanger 61b is used as the reheater. In this case, the hot water that flows on the second indoor heat exchanger 61b dissipates heat to the air in the housing 60 to be cooled. The cooled hot water flows on the air conditioning cold/hot water pipe 65b used commonly with the first air conditioning cold/hot water circuit 8a to return to the air conditioning cold/hot water circulation pump 67 and absorbs heat from the air conditioning refrigerant in the second air conditioning user-side heat exchanger 28b again to rise in temperature thereof.

Herein, in the indoor unit 2, the air cooled and dehumidified by the first indoor heat exchanger 61a and the air reheated by the second indoor heat exchanger 61b are agitated by the indoor fan 62 to become air dehumidified at the same temperature as the indoor temperature. The air is ejected to the indoor part from the air outlet (not illustrated) of the indoor unit 2.

According to Operation mode No. 4, since the cooling and dehumidifying operations and the reheating operation may be simultaneously performed, fresh air may be provided to the indoor part of the housing 60.

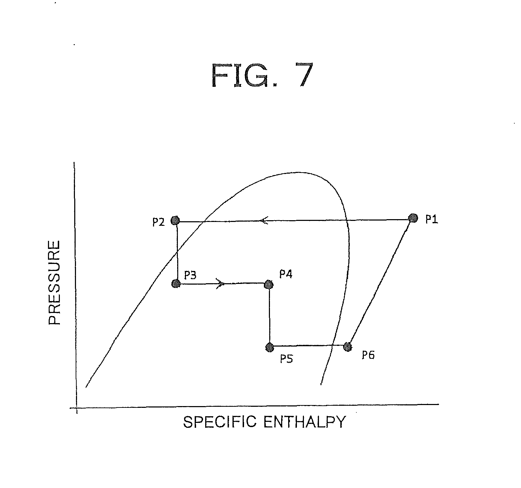

Operation mode No. 4 will be described below by using a pressure-specific enthalpy line diagram illustrated in FIG. 7. That is, the air conditioning refrigerant compressed and heated by the air conditioning compressor 21 is P1 and dissipates heat to the hot water as the heat transfer medium that flows on the second air conditioning user-side heat exchanger 28b to be P2. The air conditioning refrigerant passing through the second air conditioning user-side heat exchanger 28b has a temperature decreased up to the temperature of the hot water as the heat transfer medium that flows on the first air conditioning user-side heat exchanger 28a by passing through the second air conditioning expansion valve 27b or is depressurized up to the evaporation pressure depending on the dehumidifying load of the first air conditioning user-side heat exchanger 28a (P3). The air conditioning refrigerant passing through the second air conditioning expansion valve 27b dissipates heat to the hot water as the heat transfer medium passing through the first air conditioning user-side heat exchanger 28a through the first air conditioning user-side heat exchanger 28a and is at P4. Thereafter, the air conditioning refrigerant is depressurized and expanded to the evaporation pressure depending on the outdoor air temperature by passing through the first air conditioning expansion valve 27a to be at P5. The air conditioning refrigerant exchanges heat with the outdoor air through the air conditioning heat source-side heat exchanger 24 to be at P6 and flows back to the suction port 21a of the compressor 21. Since the operation is performed, in Operation mode No. 4, heat generated during heat absorption and compression may be dissipated to the second air conditioning user-side heat exchanger 28b and a dehumidifying operation having a large heating amount may be performed.

As described above, according to the air conditioner according to the embodiment of the present invention, the cooling operation, the heating operation, the cooling/dehumidifying operation, and the heating/dehumidifying operation having the large heating amount may be performed by using one air conditioning cycle and further, the heat exchanger may be efficiently used, through simple control without a facility cost.

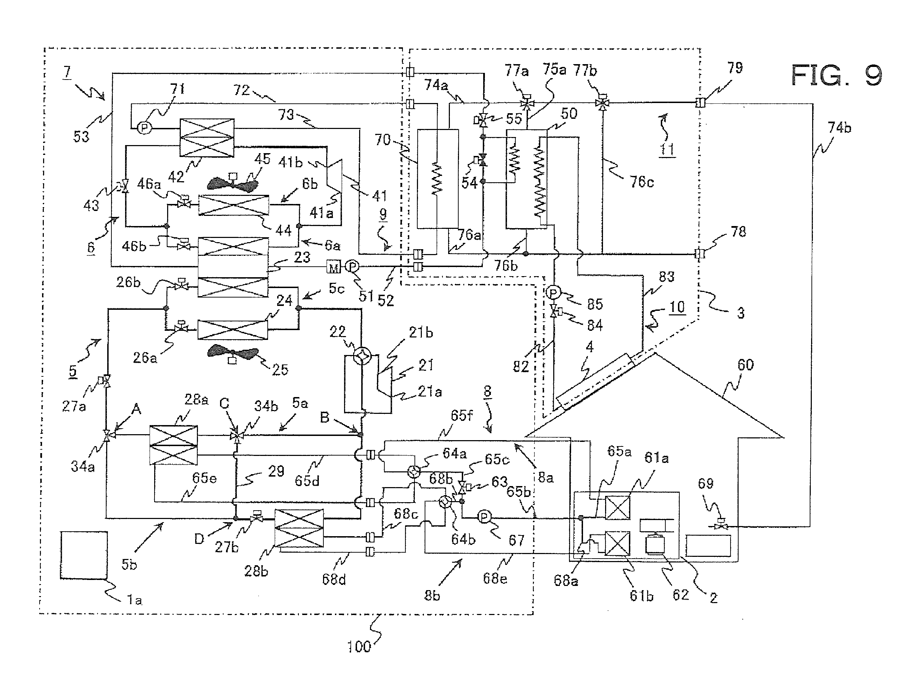

Subsequently, a configuration of an air conditioning hot water supply system according to the first embodiment of the present invention will be described with reference to FIG. 9. Since the air conditioner according to the embodiment of the present invention is mounted on the air conditioning hot water supply system, the same reference numerals refer to the same components as the air conditioner and a description thereof will be omitted.

The air conditioning hot water supply system according to the first embodiment of the present invention includes an air conditioning refrigerant circuit 5 switching the cooling operation and the heating operation, a hot water supplying refrigerant circuit 6 supplying the hot water, an intermediate hot water circulation circuit (intermediate heat medium circuit) 7 circulating water for exchanging heat with the air conditioning refrigerant circuit 5 and the hot water supplying refrigerant circuit 6, an air conditioning cold/hot water circulation circuit (air conditioning heat transfer medium circulation circuit) 8 conditioning the indoor air of the housing (cooled space) 60, a hot water supply circuit 9 circulating water for exchanging heat with the hot water supplying refrigerant circuit 6, a solar heat circulation circuit 10 circulating water or brine in which solar heat collected by a solar heat collector 4 is stored, and a hot water supply path 11 supplying high-temperature water (hot water) to the outside.

The air conditioning hot water supply system has a unit configuration including a heat pump unit 100 placed outdoors, an indoor unit 2 placed indoors, a hot water supply and heat storage tank unit 3 placed outdoors, and the solar heat collector 4 placed outdoors. The respective units are discriminated by ranges surrounded by a dashed line, as illustrated in FIG. 9.

The air conditioning refrigerant circuit 5 includes a second air conditioning refrigerant branch way 5c bypassing the air conditioning heat source-side heat exchanger 24 in addition to the air conditioning refrigerant main circuit 5a and the first air conditioning refrigerant branch way 5b. An intermediate heat exchanger 23 and an air conditioning refrigerant flow rate control valve 26b to be described below are installed on the second air conditioning refrigerant branch way 5c. That is, the air conditioning heat source-side heat exchanger 24 and the intermediate heat exchanger 23 are connected in parallel. A valve opening level of the air conditioning refrigerant flow rate control valve 26d is adjusted to control a flow rate of the air conditioning refrigerant that flows on the intermediate heat exchanger 23. An air conditioning refrigerant flow rate control valve 26a for controlling the flow rate of the air conditioning refrigerant that flows on the air conditioning heat source-side heat exchanger 24 is installed even at a position around the air conditioning heat source-side heat exchanger 24 of the air conditioning refrigerant main circuit 5a.

Subsequently, the hot water supplying refrigerant circuit 6 is a circuit where hot water supplying refrigerant is circulated and is formed in a loop by connecting a hot water supplying compressor 41 compressing the hot water supplying refrigerant, a hot water supplying user-side heat exchanger 42 exchanging heat with the hot water supply circuit 9, a hot water supplying expansion valve 43 depressurizing the hot water supplying refrigerant, the intermediate heat exchanger 23, and a hot water supplying heat source-side heat exchanger 44 exchanging heat with the air sent by the fan 45 through the refrigerant pipe. A cooling cycle (hot water supply cycle) for supplying the hot water is formed by the hot water supplying refrigerant circuit 6.

The hot water supplying compressor 41 may control the capacity by inverter controlling, and has a rotational speed which is varied from a low speed up to the high speed, like the air conditioning compressor 21. The hot water supplying user-side heat exchanger 42 is configured so that a hot water supplying refrigerant heat transfer pipe (not illustrated) where the hot water supplying refrigerant flows and a hot water supply water heat transfer pipe (not illustrated) to be described below where water of the hot water supply circuit 9 flows thermally contact each other.

Continuously, a configuration of the hot water supplying refrigerant circuit 6 will be described in detail. The hot water supplying refrigerant circuit 6 first includes a hot water supplying refrigerant main circuit 6a that is formed in a loop by connecting the discharge port 41b of the hot water supplying compressor 41, the hot water supplying user-side heat exchanger 42, the hot water supplying expansion valve 43, the intermediate heat exchanger 23, and the suction port 41a of the hot water supplying compressor 41 in sequence through the refrigerant pipe.

The hot water supplying refrigerant circuit 6 is configured by installing the hot water supplying refrigerant branch way 6b in the hot water supplying refrigerant main circuit 6a. The hot water supplying refrigerant branch way 6b is a hot water supplying refrigerant branch way that bypasses the intermediate heat exchanger 23. The hot water supplying heat source-side heat exchanger 44 and a hot water supplying refrigerant flow rate control valve 46a are installed on the hot water supplying branch way 6b. That is, the hot water supplying heat source-side heat exchanger 44 and the intermediate heat exchanger 23 are connected in parallel. A valve opening level of the hot water supplying refrigerant flow rate control valve 46a is adjusted to control a flow rate of the hot water supplying refrigerant that flows on the hot water supplying heat source-side heat exchanger 44. A hot water supplying refrigerant flow rate control valve 46b for controlling the flow rate of the hot water supplying refrigerant that flows on the intermediate heat exchanger 23 is installed even at a position around the intermediate heat exchanger 23 of the hot water supplying refrigerant main circuit 6a.

As the hot water supplying refrigerant which is circulated in the hot water supplying refrigerant circuit 6, for example, R134a, HFO1234yf, HFO1234ze, CO2, and C3H8 may be used.

Subsequently, the intermediate hot water circulation circuit (intermediate heat medium circuit) 7 is a circuit which is formed in a loop by connecting a heat storage tank 50 and one end of the intermediate heat exchanger 23 through an intermediate hot water pipe 52 and connecting the other end of the intermediate heat exchanger 23 and the heat storage tank 50 through an intermediate hot water pipe 53. An intermediate hot water circulation pump 51, a control valve 54 for controlling a circulation amount of water that returns to the heat storage tank 50, and a control valve 55 controlling a full circulation amount of water are mounted in the intermediate hot water circulation circuit 7. Water (heat transfer medium for the heat source) in the intermediate hot water circulation circuit 7 flows to the intermediate heat exchanger 23 by driving the intermediate hot water circulation pump 51 and returns to the heat storage tank 50 while performing heat exchange (heat dissipation or heat absorption) with the air conditioning refrigerant that flows on the air conditioning refrigerant circuit 5 and the hot water supplying refrigerant that flows on the hot water supplying refrigerant circuit 6 by using the intermediate heat exchanger 23, respectively. Since a heat storage material is charged in the heat storage tank 50, hot heat or cold heat acquired from the intermediate heat exchanger 23 is stored in the heat storage tank 50.

The intermediate heat exchanger 23 has a structure in which three fluids of the air conditioning refrigerant that is circulated in the air conditioning refrigerant circuit 5, the hot water supplying refrigerant that is circulated in the hot water supplying refrigerant circuit 6, and the water that is circulated in the intermediate hot water circulation circuit 7 may exchange heat one another. In detail, the intermediate heat exchanger 23 is inserted into an outer pipe (not illustrated) where the water of the intermediate hot water circulation circuit 7 flows with the air conditioning refrigerant heat transfer pipe (not illustrated) where the air conditioning refrigerant flows and the hot water supplying refrigerant heat transfer pipe (not illustrated) where the hot water supplying refrigerant flows joined to each other. By this configuration, exhaust heat of the air conditioning circuit 5 and exhaust heat of the hot water supplying circuit 6, and hot/cool heat stored in the intermediate hot water circulation circuit 7 may be effectively used each other. In the embodiment, the air conditioning refrigerant heat transfer pipe and the hot water supplying refrigerant heat transfer pipe are joined to each other by soldering, but so long as the heat transfer pipes may thermally contact each other, a method of fixing the heat transfer pipes by welding or winding the heat transfer pipes with a band may be adopted.

The intermediate heat exchanger 23 has a difference of statical head from the air conditioning heat source-side heat exchanger 24, and the air conditioning refrigerant is naturally circulated between the intermediate heat exchanger 23 and the air conditioning heat source-side heat exchanger 24 by using a difference in density between saturated liquid and saturated gas of the air conditioning refrigerant filled in the air conditioning refrigerant circuit 5. Similarly, the intermediate heat exchanger 23 has a different head even from the hot water supplying heat source-side heat exchanger 44 to be described below, and the hot water supplying refrigerant is naturally circulated between the intermediate heat exchanger 23 and the hot water supplying heat source-side heat exchanger 44 by using a difference in density between saturated liquid and saturated gas of the hot water supplying refrigerant filled in the hot water supplying refrigerant circuit 6. The intermediate heat exchanger 23 is installed adjacent to the air conditioning heat source-side heat exchanger 24 and the hot water supplying heat source-side heat exchanger 44 in order to improve heat exchange efficiency.

Subsequently, the hot water supply circuit 9 is a circuit that is formed in a loop by connecting a hot water storage tank 70 and one end of the hot water supplying user-side heat exchanger 42 through a hot water supplying pipe 72 and connecting the other end of the hot water supplying user-side heat exchanger 42 and the hot water storage tank 70 through a hot water supplying pipe 73. A hot water supplying circulation pump 71 is mounted on the hot water supplying pipe 72. Water in the hot water storage tank 70 flows to the hot water supplying user-side heat exchanger 42 by driving the hot water supplying circulation pump 71 and exchanges heat with the hot water supplying refrigerant to become high-temperature water (hot water) in the hot water supplying user-side heat exchanger 42, and returns to the storage tank 70. Since the heat storage material is charged in the hot water storage tank 70, the hot heat acquired from the hot water supplying user-side heat exchanger 42 is stored in the hot water storage tank 70.

Subsequently, the solar heat circulation circuit 10 is a circuit that is formed in a loop by connecting the solar heat collector 4 installed on a roof of the housing 60 and the heat storage tank 50 through solar heat pipes 82 and 83. A solar heat circulation pump 85 is mounted on the solar heat pipe 82. Water or brine (solar heat transfer medium) heated by the solar heat collector 4 is circulated in the solar heat circulation circuit 10 by driving the solar heat circulation pump 85 and exchanges heat with the water stored in the heat storage tank 50 while flowing on the heat storage tank 50. As a result, the water in the heat storage tank 50 may be made hot by using solar heat. A flow rate control valve 84 for controlling a flow rate of the water or brine that flows on the solar heat circulation circuit 10 is installed on the solar heat pipe 82.

Subsequently, the hot water supply path 11 includes a pipe 74a for supplying the high-temperature water stored in the hot water storage tank 70 to a hot water supply port 79, a pipe 75a for supplying intermediate-temperature water retained in the heat storage tank 50 to the hot water supply port 79, a pipe 76a for supplying tap water from a water supply port 78 to the hot water storage tank 70, a pipe 76b for supplying the tap water from the water supply port 78 to the heat storage tank 50, and a pipe 76c for directly supplying the tap water from the water supply port 78 to the hot water supply port 79. The pipe 74a and the pipe 75a are connected through a 3-way valve 77a and the pipe 74a and the pipe 76c are connected through a 3-way valve 77b. According to the hot water supply path 11 configured as above, by adjusting opening/closing of each port of the 3-way valves 77a and 77b, three waters having different temperatures, which include the water in the hot water storage tank 70, the water in the heat storage tank 50, and the tap water supplied from the water supply port 78, are mixed to generate water having an appropriate temperature. The hot water supply port 79 and the hot water supplying control valve 69 installed in the housing 60 are connected through the pipe 74b and when the hot water supplying control valve 69 is opened, the hot water is supplied to hot water supply load sides (a bathtub, a kitchen, a washroom, and the like).

Although not illustrated, a thermometer or a flowmeter is appropriately installed in each of the circuits 5 to 11 constituting the air conditioning hot water supply system. A detection signal of the thermometer or the flowmeter is introduced into a control device 1a installed in the heat pump unit 1. The control device 1a inputs an operation signal of a remote controller not illustrated and signals of each thermometer and each flowmeter and controls operations of various devices (the compressor, the pump, the fan, the expansion valve, the 4-way valve, the 3-way valve, a 2-way valve, and the like) mounted on the respective circuits 5 to 11 based on the signals.

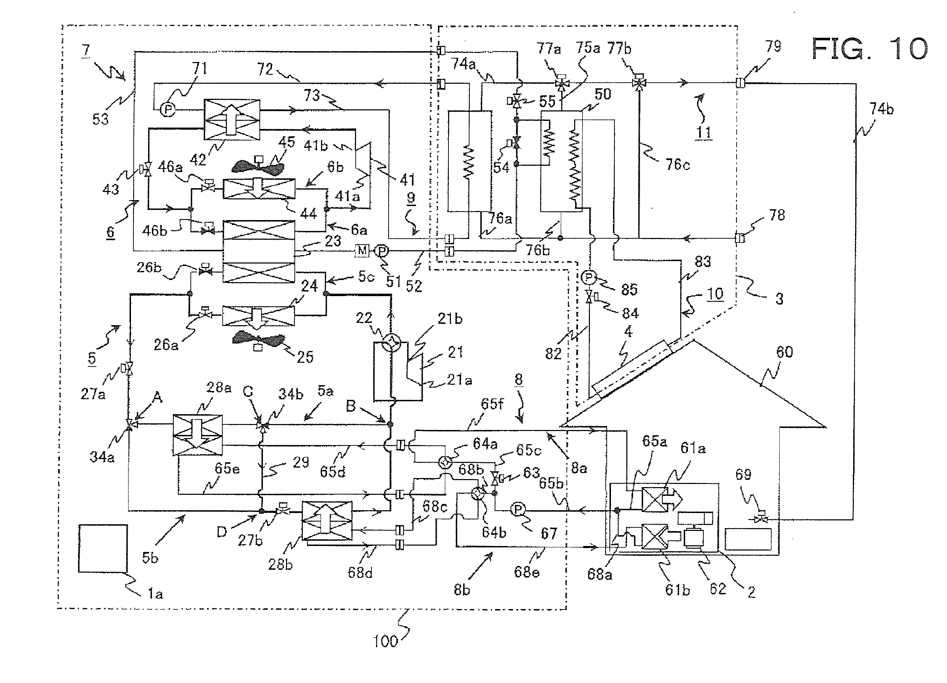

Continuously, various operation modes performed by the air conditioning hot water supply system will be described with reference to FIGS. 10 to 13. Herein, in FIGS. 10 to 13, an arrow given to each heat exchanger indicates the flow of heat and an arrow given to each of the circuits 5 to 11 indicates a direction in which the fluid flows on each circuit. In FIGS. 10 to 13, the white flow rate control valve is opened and the black flow rate control valve is closed at a predetermined opening level. In FIGS. 10 to 13, all of three ports in a white 3-way valve are opened, and in a 3-way valve in which two of three ports remain white and one port is black, the white ports are opened and the black port is closed. In FIGS. 10 to 13, an arc-shaped solid line drawn in the 4-way valve indicates a flow path of the fluid that flows on the 4-way valve. A thick arrow in the figures indicates the flowing direction of the heat.

### "Operation pattern No. 1 <Cooling and humidifying/hot water supplying operation (independently)>" (see FIG. 10)

Operation pattern No. 1 is an operation pattern in which the cooling operation by the air conditioning refrigerant circuit 5 and the hot water supply operation by the hot water supplying refrigerant circuit 6 are performed, respectively. In Operation pattern No. 1, water is not circulated in the intermediate hot water circulation circuit 7 and the air conditioning refrigerant flow rate control valve 26b and the hot water supplying refrigerant flow rate control valve 46b are closed, and as a result, the air conditioning refrigerant circuit 5, the hot water supplying refrigerant circuit 6, and the intermediate hot water circulation circuit 7 do not exchange heat one another through the intermediate heat exchanger 23. In the solar heat circulation circuit 10, the solar heat circulation pump 85 stops. In Operation pattern No. 1, an operation of the same air conditioning cycle as Operation mode No. 3 described above is performed. As a result, in the following description regarding Operation pattern No. 1, the operation of the air conditioning refrigerant circuit 5 and a flow of the air conditioning refrigerant, and the operation of the air conditioning cold/hot water circulation circuit 8 and the flow of water will not be described.

In Operation pattern No. 1, a valve opening level of the air conditioning control valve 26a is controlled by the control device 1a. In detail, the control device 1a adjusts the valve opening level of the air conditioning refrigerant flow rate control valve 26a according to the reheating amount of the first indoor heat exchanger 61a used as the reheater in Operation pattern No. 1.

In the hot water supplying refrigerant circuit 6, gas refrigerant compressed and subjected to the high temperature and the high pressure by the hot water supplying compressor 41 flows into the hot water supplying user-side heat exchanger 42. The high-temperature and high-pressure gas refrigerant that flows in the hot water supplying user-side heat exchanger 42 dissipates heat to the water that flows in the hot water supply circuit 9 to be condensed and liquefied. The liquefied high-pressure refrigerant flows into the hot water supplying refrigerant tank 46 and thereafter, is depressurized and expanded by the hot water supplying expansion valve 43 of which the opening level is controlled at a predetermined opening level, and becomes low-temperature and low-pressure vapor-liquid two-phase refrigerant. The vapor-liquid two-phase refrigerant flows into the hot water supplying heat source-side heat exchanger 44. The vapor-liquid two-phase refrigerant that flows into the hot water supplying heat source-side heat exchanger 44 absorbs heat from the air to be evaporated and become low-pressure gas refrigerant. The low-pressure gas refrigerant discharged from the hot water supplying heat source-side heat exchanger 44 flows into the suction port 41a of the hot water supplying compressor 41 and is compressed again by the hot water supplying compressor 41 to become the high-temperature and high-pressure gas refrigerant.

In the hot water supply circuit 9, the water stored in the hot water storage tank 70 is transported to the hot water supplying user-side heat exchanger 42 by the hot water supplying circulation pump 71, and absorbs hot heat from the hot water supplying refrigerant that flows on the hot water supplying refrigerant circuit 6 while flowing on the hot water supplying user-side heat exchanger 42. As a result, the water becomes high-temperature water by the hot water supplying user-side heat exchanger 42.

In the hot water supply path 11, water having a predetermined temperature, which is acquired by operating the air conditioning hot water supply system, is supplied to a hot water supply load side according to a demand from the hot water supply load side.

According to Operation pattern No. 1, since the cooling and dehumidifying operations and the reheating operation may be simultaneously performed, fresh air may be provided to the indoor part of the housing 60. Moreover, since each of the air conditioning cycle and the hot water supply cycle may be independently operated, operations depending on the demands from the air conditioning load and the hot water supply load may be performed.

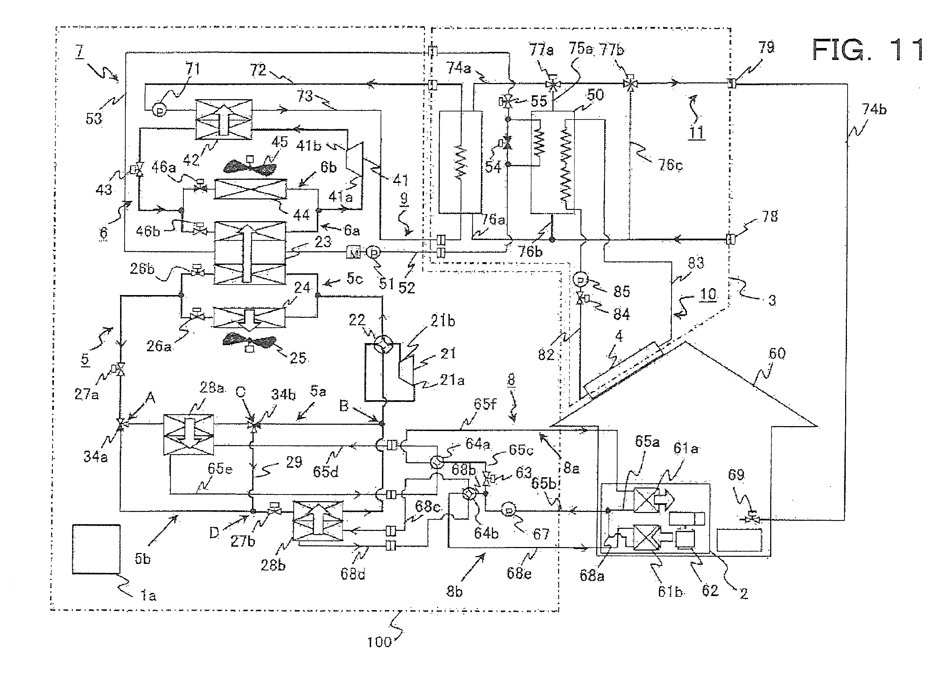

### "Operation pattern No. 2 <Cooling and humidifying/hot water supplying operation (using exhaust heat)>" (see FIG. 11)

Operation pattern No. 2 is an operation pattern in which the cooling operation by the air conditioning refrigerant circuit 5 and the hot water supply operation by the hot water supplying refrigerant circuit 6 are performed, respectively. In Operation pattern No. 2, water is not circulated in the intermediate hot water circulation circuit 7, but the air conditioning refrigerant flow rate control valve 26b and the hot water supplying refrigerant flow rate control valve 46b are opened, and as a result, the air conditioning refrigerant circuit 5 and the hot water supplying refrigerant circuit 6 exchange heat one another through the intermediate heat exchanger 23. Since other points are substantially the same as those of Operation pattern No. 1, points different from Operation pattern No. 1 will be primarily described and operations common to Operation pattern No. 1 will not be described, in the following description.

In Operation pattern No. 2, valve opening levels of the air conditioning refrigerant flow rate control valve 26a and the air conditioning refrigerant flow rate control valve 26b are controlled by the control device 1a. In detail, the control device 1a adjusts the valve opening levels of the air conditioning refrigerant flow rate control valves 26a and 26b according to the reheating amount of the first indoor heat exchanger 61a used as the reheater in Operation pattern No. 2.

In the air conditioning refrigerant circuit 5, the gas refrigerant compressed and subjected to the high temperature and the high pressure by the air conditioning compressor 41 flows dividedly into the air conditioning heat source-side heat exchanger 24 and the intermediate heat exchanger 23. The air conditioning refrigerant that flows on the air conditioning heat source-side heat exchanger 24 dissipates heat to the air. Meanwhile, the air conditioning refrigerant that flows on the intermediate heat exchanger 23 dissipates heat to the hot water supplying refrigerant that flows on the hot water supplying refrigerant circuit 6. The air conditioning refrigerants discharged from the air conditioning heat source-side heat exchanger 24 and the intermediate heat exchanger 23, respectively join together and thereafter, flow to the air conditioning expansion valve 27a. Thereafter, Operation pattern No. 2 is the same as Operation pattern No. 1.

Operation pattern No. 2 is different from Operation pattern No. 1 in that in the hot water supplying refrigerant circuit 6, the hot water supplying flow rate control valve 46a is closed, and thus the hot water supplying refrigerant does not flow on the hot water supplying heat source-side heat exchanger 44, but flows to the intermediate heat exchanger 23 and absorbs heat from the air conditioning refrigerant that flows on the air conditioning refrigerant circuit 5 to become the gas refrigerant in the intermediate exchanger 23.

According to Operation pattern No. 2, since the cooling and dehumidifying operations and the reheating operation may be simultaneously performed, fresh air may be provided to the indoor part of the housing 60. Moreover, since air conditioning exhaust heat may be used as a heat source of the hot water supply cycle, heat energy may be effectively used and power consumption required for operating the hot water supply cycle may be reduced. Accordingly, in Operation pattern No. 2, the efficiency of the air conditioning hot water supply system is improved.

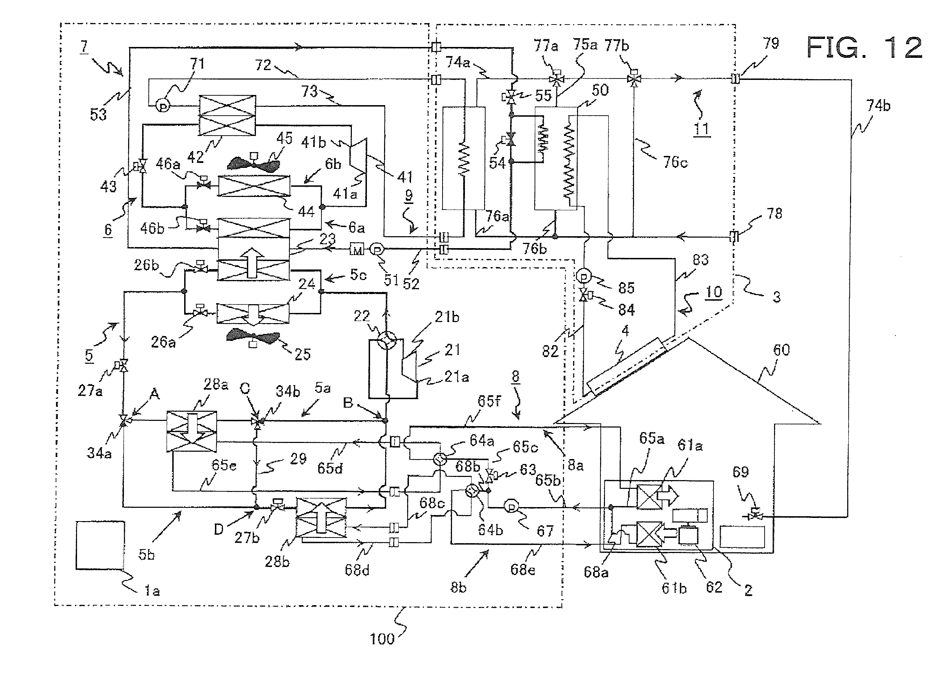

### "Operation pattern No. 3 <Cooling and humidifying operations (using exhaust heat)>" (see FIG. 12)

Operation pattern No. 3 is an operation pattern in which the cooling operation by the air conditioning refrigerant circuit 5 is performed, but the hot water supply operation by the hot water supplying refrigerant circuit 6 stops. In Operation pattern No. 3, the intermediate hot water circulation pump 51 is driven such that water is circulated in the intermediate hot water circulation circuit 7. As a result, the air conditioning refrigerant circuit 5 and the intermediate hot water circulation circuit 7 exchange heat each other through the intermediate heat exchanger 23. Since other points are substantially the same as those of Operation pattern No. 2, points different from Operation pattern No. 2 will be primarily described and operations common to Operation pattern No. 2 will not be described, in the following description.

In Operation pattern No. 3, valve opening levels of the air conditioning refrigerant flow rate control valve 26a and the air conditioning refrigerant flow rate control valve 26b are controlled by the control device 1a. In detail, the control device 1a adjusts the valve opening levels of the air conditioning refrigerant flow rate control valves 26a and 26b according to the reheating amount of the first indoor heat exchanger 61a used as the reheater in Operation pattern No. 3.

The water that flows on the intermediate hot water circulation circuit 7 absorbs heat from the air conditioning refrigerant that flows on the air conditioning refrigerant circuit 5 in the intermediate heat exchanger 23 to rise in temperature thereof up to an intermediate temperature (a temperature which is higher than the temperature of the tap water, but lower than the temperature of the water stored in the hot water storage tank 70). The temperature-increasing water flows into the heat storage tank 50 through the intermediate hot water pipe 53 and hot heat is stored in the heat storage tank 50.

According to Operation pattern No. 3, since the cooling and dehumidifying operations and the reheating operation may be simultaneously performed, fresh air may be provided to the indoor part of the housing 60. Moreover, since the intermediate-temperature water may be generated by using the air conditioning exhaust heat without operating the hot water supply cycle, heat energy is effectively used and the power consumption required for operating the hot water supply cycle may be reduced. Since the hot heat may be stored in the heat storage tank 50, the air conditioning exhaust heat may be used for the hot water supply cycle even when there is a difference in operating time between the air conditioning cycle and the hot water supply cycle. Accordingly, in Operation pattern No. 3, the efficiency of the air conditioning hot water supply system is improved.

In conclusion, the embodiment associated with using the exhaust heat has been described primarily based on the cooling and dehumidifying operations, but since the intermediate heat exchanger 23 and the air conditioning heat source-side heat exchanger 24 serve as the condensers even in the cooling operation, the equivalent effect may be acquired in association with the improvement of the efficiency by using the exhaust heat.

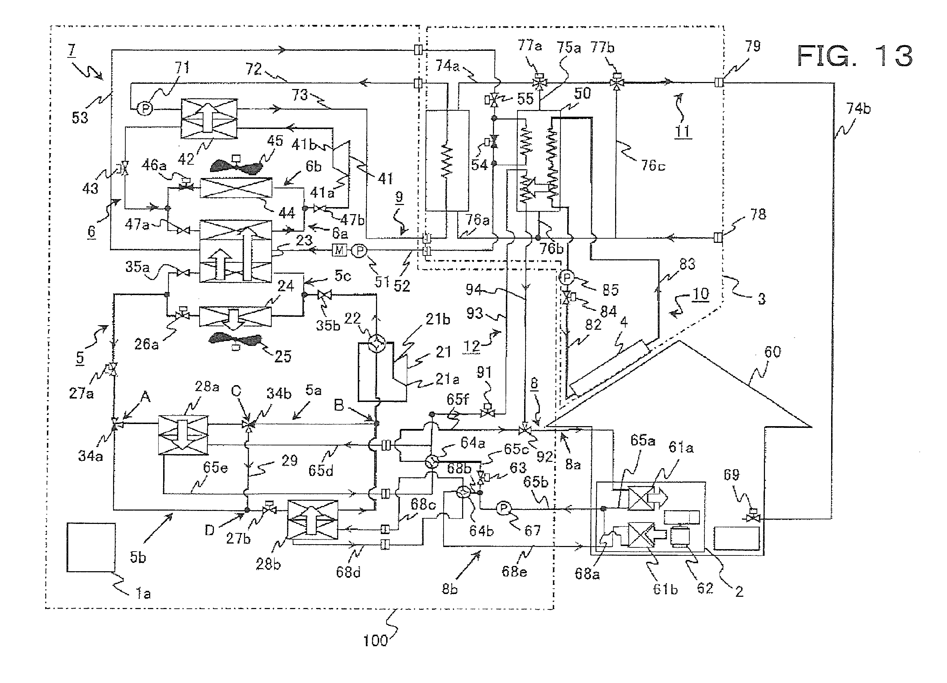

Subsequently, a configuration of an air conditioning hot water supply system according to a second embodiment of the present invention will be described with reference to FIG. 13. The air conditioning hot water supply system according to the second embodiment of the present invention is different from the air conditioning hot water supply system according to the first embodiment of the present invention in that the solar heat collected by the solar heat collector 4 is introduced into the air conditioning cold/hot water circulation circuit 8, a 2-way valve 35a is used instead of the air conditioning refrigerant flow rate control valve 26b, and a 2-way valve 47a is used instead of the hot water supply refrigerant flow rate control valve 46b. As a result, in describing the air conditioning hot water supply system according to the second embodiment, the same reference numerals refer to the same components as those of the air conditioning hot water supply system according to the first embodiment and a description thereof will be omitted.

The air conditioning hot water supply system according to the second embodiment of the present invention includes a solar heat indirect circulation circuit 12 that is formed in a loop by connecting the heat storage tank 50 and the first air conditioning cold/hot water circuit 8a through an air conditioning cold/hot water pipe 93 and an air conditioning cold/hot water pipe 94, mounting a cold/hot water flow rate control valve 91 on the air conditioning cold/hot water pipe 93, and mounting a 3-way valve 92 on a connector of the air conditioning cold/hot water pipe 65f and the air conditioning cold/hot water pipe 94. Water that flows on the solar heat indirect circulation circuit 12 and water or brine that flows on the solar heat circulation circuit 10 are configured to exchange heat each other through the heat storage tank 50.

According to the air conditioning hot water supply system according to the second embodiment, by driving the air conditioning cold/hot water circulation pump 67, water in the first air conditioning cold/hot water pipe 8a may be guided to the heat storage tank 50 through the cold/hot water flow rate control valve 91 installed on the solar heat indirect circulation circuit 12. Herein, when the water or brine in the solar heat circulation circuit 10 is circulated by driving the solar heat circulation pump 85, the solar heat collected by the solar heat collector 4 is stored in the heat storage tank 50. Therefore, the water in the solar heat indirect circulation circuit 12 guided to the heat storage tank 50 absorbs the hot heat stored in the heat storage tank 50 to be made hot. The water which is made hot flows on the air conditioning cold/hot water pipe 94 and returns to the first air conditioning cold/hot water circuit 8a through the 3-way valve 92.

As such, in the second embodiment, the water that flows on the first air conditioning cold/hot water circuit 8a is not used only to absorb heat from the air conditioning refrigerant through the first air conditioning user-side heat exchanger 28a but also may indirectly receive the solar heat collected by the solar heat collector 4 through the solar heat indirect circulation circuit 12. Accordingly, in the second embodiment, a heat amount of the solar heat may be used for reheating in the dehumidifying operation or heating in the heating operation, and the efficiency of the air conditioning hot water supply system is improved.

The control device 1a controls a valve opening level of the cold/hot water flow rate control valve 91 according to the reheating amount in the dehumidifying operation or the heating amount in the heating operation to adjust a flow rate of water that flows from the first air conditioning cold/hot water circuit 8a to the solar heat indirect circulation circuit 12.

As described above, according to the air conditioning hot water supply systems according to the first and second embodiments of the present invention, the cooling operation, the heating operation, the cooling and dehumidifying operation (cooling subjective dehumidifying operation), and the heating and dehumidifying operation (heating subjective dehumidifying operation) having the high heating amount may be performed by one air conditioning cycle without spending the facility cost or performing the complicated control. In the air conditioning hot water supply systems according to the first and second embodiments, since the air conditioning exhaust heat may be used for the hot water supply cycle, the efficiency of the entire system is improved. In the air conditioning hot water supply systems according to the first and second embodiments, since the solar heat may be used for the air conditioning cycle, new efficiency of the entire system may be improved. Of course, the power consumption may be reduced.

In the air conditioning hot water supply system according to the second embodiment, the solar heat indirect circulation circuit 12 is connected to the first air conditioning refrigerant circuit 8a, but the solar heat indirect circulation circuit 12 may be connected to the second air conditioning refrigerant circuit 8b.

### REFERENCE SIGN LIST

1a: Control device
4: Solar heat collector
5: Air conditioning refrigerant circuit
5a: Air conditioning refrigerant main circuit
5b: First air conditioning refrigerant branch way
5c: Second air conditioning refrigerant branch way
6: Hot water supply refrigerant circuit
7: Intermediate hot water circulation circuit (intermediate heat medium circuit)
8: Air conditioning cold/hot water circulation circuit (air conditioning heat transfer medium circulation circuit)
8a: First air conditioning cold/hot water circuit (first air conditioning heat transfer medium circuit)
8b: Second air conditioning cold/hot water circuit (second air conditioning heat transfer medium circuit)
10: Solar heat circulation circuit
12: Solar heat indirect circulation circuit
21: Air conditioning compressor
21a: Suction port of air conditioning compressor
21b: Discharge port of air conditioning compressor
22: 4-way valve (air conditioning flow path switching valve)
23: Intermediate heat exchanger
24: Air conditioning heat source-side heat exchanger
26a, 26b: Air conditioning refrigerant flow rate control valve
27a: First air conditioning expansion valve
27b: Second air conditioning expansion valve
28a: First air conditioning user-side heat exchanger
28b: Second air conditioning user-side heat exchanger
29: Air conditioning bypass pipe
34a, 34b: 3-way valve (connection switching means)
41: Hot water supplying compressor
42: Hot water supplying user-side heat exchanger
43: Hot water supplying expansion valve
44: Hot water supplying heat source-side heat exchanger
50: Heat storage tank
60: Housing (cooled space)
61a: First indoor heat exchanger
61b: Second indoor heat exchanger
64a: 4-way valve (first flow path switching valve)
64b: 4-way valve (second flow path switching valve)
65b: Air conditioning cold/hot water pipe (common pipe)
67: Air conditioning cold/hot water circulation pump (air conditioning heat transfer medium circulation pump)

## Claims

1. An air conditioner, comprising:
an air conditioning refrigerant circuit performing a cooling operation and a heating operation by switching the cooling operation and the heating operation; and
an air conditioning heat transfer medium circulation circuit conditioning air of a cooled space, wherein:
the air conditioning refrigerant circuit includes an air conditioning refrigerant main circuit that is formed in a loop by sequentially connecting an air conditioning compressor, an air conditioning flow path switching valve, an air conditioning heat source-side heat exchanger for exchanging heat with an air conditioning heat source-side heat transfer medium, a first air conditioning expansion valve, and a first air conditioning user-side heat exchanger for exchanging heat with an air conditioning user-side heat transfer medium through a refrigerant pipe;
a first air conditioning refrigerant branch way bypassing the first air conditioning user-side heat exchanger is installed in the air conditioning refrigerant main circuit;
a second air conditioning user-side heat exchanger for exchanging heat with the air conditioning user-side heat transfer medium is installed on the first air conditioning refrigerant branch way so as to connect with the first air conditioning user-side heat exchanger in parallel;
the air conditioning refrigerant main circuit and the first air conditioning refrigerant branch way are connected through an air conditioning bypass pipe so that the first air conditioning user-side heat exchanger and the second air conditioning user-side heat exchanger are connected in series;
connection switching means for switching the connection of the first air conditioning user-side heat exchanger and the second air conditioning user-side heat exchanger to serial connection and parallel connection are installed in the air conditioning refrigerant circuit;
a second air conditioning expansion valve is installed at a position between the first air conditioning user-side heat exchanger and the second air conditioning user-side heat exchanger of the air conditioning refrigerant circuit while the first air conditioning user-side heat exchanger and the second air conditioning user-side heat exchanger are connected in series by the connection switching means;
the air conditioning heat transfer medium circulation circuit includes a first air conditioning heat transfer medium circuit formed in a loop by connecting the first air conditioning user-side heat exchanger and a first indoor heat exchanger installed in the cooled space through a pipe and a second air conditioning heat transfer medium circuit formed in a loop by connecting the second air conditioning user-side heat exchanger and a second indoor heat exchanger installed in the cooled space through a pipe; and
water or brine is circulated in each of the first air conditioning heat transfer medium circuit and the second air conditioning heat transfer medium circuit as the air conditioning user-side heat transfer medium.

2. The air conditioner of claim 1, wherein:
a first flow path switching valve for switching a flowing direction of the air conditioning user-side heat transfer medium is installed in the first air conditioning heat transfer medium circuit;
a second flow path switching valve for switching the flowing direction of the air conditioning user-side heat transfer medium is installed in the second air conditioning heat transfer medium circuit;
a common pipe used commonly with some of pipes constituting the second air conditioning heat transfer medium circuit is joined to some of pipes constituting the first air conditioning heat transfer medium circuit; and
an air conditioning heat transfer medium circulation pump for simultaneously circulating the air conditioning user-side heat transfer medium in both the first air conditioning heat transfer medium circuit and the second air conditioning heat transfer medium circuit is mounted on the common pipe.

3. An air conditioning hot water supply system, comprising:
an air conditioning refrigerant circuit performing a cooling operation and a heating operation by switching the cooling operation and the heating operation;
an air conditioning heat transfer medium circulation circuit conditioning air of a cooled space;
a hot water supplying refrigerant circuit supplying hot water;
an intermediate heat medium circuit dissipating or absorbing heat with respect to the air conditioning refrigerant circuit and the hot water supplying refrigerant circuit by using a hot/cold heat source;
an intermediate heat exchanger exchanging heat among three fluids of an air conditioning refrigerant circulated in the air conditioning refrigerant circuit, a hot water supplying refrigerant circulated in the hot water supplying refrigerant circuit, and a heat source heat transfer medium circulated in the intermediate heat medium circuit; and
a control device controlling an operation, wherein:
the air conditioning refrigerant circuit includes an air conditioning refrigerant main circuit that is formed in a loop by sequentially connecting an air conditioning compressor, an air conditioning flow path switching valve, an air conditioning heat source-side heat exchanger for exchanging heat with an air conditioning heat source-side heat transfer medium, a first air conditioning expansion valve, and a first air conditioning user-side heat exchanger for exchanging heat with an air conditioning user-side heat transfer medium through a refrigerant pipe;
a first air conditioning refrigerant branch way bypassing the first air conditioning user-side heat exchanger and a second air conditioning refrigerant branch way bypassing the air conditioning heat source-side heat exchanger are installed in the air conditioning refrigerant main circuit;
a second air conditioning user-side heat exchanger for exchanging heat with the air conditioning user-side heat transfer medium is installed on the first air conditioning refrigerant branch way so as to connect with the first air conditioning user-side heat exchanger in parallel;
the air conditioning refrigerant main circuit and the air conditioning refrigerant branch way are connected through an air conditioning bypass pipe so that the first air conditioning user-side heat exchanger and the second air conditioning user-side heat exchanger are connected in series;
the intermediate heat exchanger and an air conditioning refrigerant flow rate control valve for adjusting a flow rate of air conditioning refrigerant that flows on the intermediate heat exchanger are installed on the second air conditioning refrigerant branch way;
connection switching means for switching the connection of the first air conditioning user-side heat exchanger and the second air conditioning user-side heat exchanger to serial connection and parallel connection are installed in the air conditioning refrigerant circuit;
a second air conditioning expansion valve is installed at a position between the first air conditioning user-side heat exchanger and the second air conditioning user-side heat exchanger of the air conditioning refrigerant circuit while the first air conditioning user-side heat exchanger and the second air conditioning user-side heat exchanger are connected in series by the connection switching means;
the air conditioning heat transfer medium circulation circuit includes a first air conditioning heat transfer medium circuit formed in a loop by connecting the first air conditioning user-side heat exchanger and a first indoor heat exchanger installed in the cooled space through a pipe and a second air conditioning heat transfer medium circuit formed in a loop by connecting the second air conditioning user-side heat exchanger and a second indoor heat exchanger installed in the cooled space through a pipe;
water or brine is circulated in each of the first air conditioning heat transfer medium circuit and the second air conditioning heat transfer medium circuit as the air conditioning user-side heat transfer medium;
the hot water supplying refrigerant circuit includes a hot water supplying main circuit that is formed in a loop by sequentially connecting a hot water supplying compressor, a hot water supplying user-side heat exchanger exchanging heat with a hot water supplying user-side heat transfer medium, a hot water supplying expansion valve, and the intermediate heat exchanger through a refrigerant pipe;
a hot water supplying refrigerant branch way bypassing the intermediate heat exchanger is installed in the hot water supplying refrigerant main circuit, a hot water supplying heat source-side heat exchanger for exchanging heat between a hot water supplying heat source-side heat transfer medium and the hot water supplying refrigerant is installed on the hot water supplying refrigerant branch way; and
a heat storage tank for storing hot heat or cold heat which the heat source heat transfer medium absorbs is installed in the intermediate heat medium circuit.

4. The air conditioning hot water supply system of claim 3, wherein:
the control device executes a humidifying operation by the air conditioning refrigerant circuit by connecting the first air conditioning user-side heat exchanger and the second air conditioning user-side heat exchanger in series by operating the connection switching means and controls an opening level of the air conditioning refrigerant flow rate control valve according to a reheating amount heat-exchanged in the first indoor heat exchanger or the second indoor heat exchanger.

5. The air conditioning hot water supply system of claim 3 or 4, comprising:
a solar heat circulation circuit formed in a loop by connecting a solar heat collector collecting solar heat and the heat storage tank through a pipe; and
a solar heat indirect circulation circuit formed in a loop by connecting at least one of the first air conditioning heat transfer medium circuit and the second air conditioning heat transfer medium circuit and the heat storage tank through a pipe,
wherein a solar heat transfer medium circulated in the solar heat circulation circuit and the air conditioning user-side heat transfer medium circulated in the solar heat indirect circulation circuit are configured to exchange heat each other through the heat storage tank.
